(19) **Europäisches Patentamt / European Patent Office / Office européen des brevets**

(11) **EP 3 629 504 A1**

(12) **EUROPEAN PATENT APPLICATION**
published in accordance with Art. 153(4) EPC

(43) Date of publication:
**01.04.2020 Bulletin 2020/14**

(21) Application number: **18818810.6**

(22) Date of filing: **31.05.2018**

(51) Int Cl.:
**H04L 1/06** *(2006.01)*

(86) International application number:
**PCT/CN2018/089391**

(87) International publication number:
**WO 2018/228214 (20.12.2018 Gazette 2018/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.06.2017 CN 201710459501**

(71) Applicant: **Huawei Technologies Co., Ltd.**
**Longgang District**
**Shenzhen, Guangdong 518129 (CN)**

(72) Inventors:
• **ZHANG, Di**
  **Shenzhen**
  **Guangdong 518129 (CN)**
• **ZHANG, Ruiqi**
  **Shenzhen**
  **Guangdong 518129 (CN)**
• **LI, Xueru**
  **Shenzhen**
  **Guangdong 518129 (CN)**

(74) Representative: **Körber, Martin Hans**
**Mitscherlich PartmbB**
**Patent- und Rechtsanwälte**
**Sonnenstrasse 33**
**80331 München (DE)**

(54) **METHOD FOR TRANSMITTING CHANNEL STATE INFORMATION, ACCESS NETWORK DEVICE AND TERMINAL DEVICE**

(57) This application provides a channel state information transmission method, an access network device, and a terminal device. The method includes: receiving, by an access network device, channel state information CSI reported by a terminal device, where the CSI includes a first precoding matrix indication PMI and a second PMI, and determining, by the access network device, a precoding matrix $\mathbf{W}$ based on the first PMI, the second PMI, and a preset codebook, where $\mathbf{W}$ meets $\mathbf{W} = \mathbf{W}_1 \times \mathbf{W}_2$, $\mathbf{W}_1$ corresponds to the first PMI, $\mathbf{W}_2$ corresponds to the second PMI, the second PMI indicates some column vectors of $\mathbf{W}_2$ and an amplitude association relationship between the some column vectors of $\mathbf{W}_2$ and remaining column vectors of $\mathbf{W}_2$, and a quantity of columns of $\mathbf{W}$ is greater than 2. According to the method, CSI feedback overheads of the terminal device are effectively reduced.

FIG. 2

## Description

This application claims priority to Chinese Patent Application No. 201710459501.X, filed with the Chinese Patent Office on June 16, 2017 and entitled "CHANNEL STATE INFORMATION TRANSMISSION METHOD, ACCESS NETWORK DEVICE, AND TERMINAL DEVICE", which is incorporated herein by reference in its entirety.

## TECHNICAL FIELD

This application relates to communications technologies, and in particular, to a channel state information transmission method, an access network device, and a terminal device.

## BACKGROUND

In a frequency division duplexing (Frequency Division Duplexing, FDD for short) system in long term evolution (Long Term Evolution, LTE for short), a terminal device performs channel estimation by using a reference signal sent by a network device, to obtain channel state information (Channel State Information, CSI for short) of a downlink channel, and feeds back the CSI to the network device. For example, the terminal device sends, to the network device, a precoding matrix index (Precoding Matrix Index, PMI for short), a rank index (Rank Index, RI for short), and a channel quality index (Channel Quality Index, CQI for short). The network device selects, based on the index information, a precoding matrix from a codebook agreed on by the network device and the UE, and further precodes to-be-sent downlink data by using the precoding matrix, to improve downlink communication quality.

Currently, in the prior art, when a terminal device feeds back CSI to a base station, the following method is used: The terminal device feeds back the CSI to the base station in a two-level feedback mechanism ($\mathbf{W} = \mathbf{W}_1 \times \mathbf{W}_2$). Specifically, when a rank of a precoding matrix determined by the terminal device is 1 (rank = 1),

$$\mathbf{W} = \begin{bmatrix} \tilde{\mathbf{w}}_{0,0} \\ \tilde{\mathbf{w}}_{1,0} \end{bmatrix} = \mathbf{W}_1 \mathbf{W}_2$$

, or when a rank of a precoding matrix determined by the terminal device is 2 (rank = 2),

$$\mathbf{W} = \begin{bmatrix} \tilde{\mathbf{w}}_{0,0} & \tilde{\mathbf{w}}_{0,1} \\ \tilde{\mathbf{w}}_{1,0} & \tilde{\mathbf{w}}_{1,1} \end{bmatrix} = \mathbf{W}_1 \mathbf{W}_2$$

, where $\tilde{w}_{r,l} = \sum_0^{L-1} \mathbf{b}_{k_1}^{(i)} \mathbf{b}_{k_2}^{(i)} \cdot p_{r,l,i}^{(WB)} \cdot p_{r,l,i}^{(SB)} \cdot c_{r,l,i}$ , $\mathbf{b}_{k_1,k_2}$ is a discrete Fourier transform (Discrete Fourier Transform, DFT for short) vector, r is a polarization direction of $\mathbf{W}$ or $\mathbf{W}_2$, r = {0, 1}, l is a quantity of columns of $\mathbf{W}_2$, l = {0, 1}, and i is a quantity of columns of $\tilde{\mathbf{w}}$ in $\mathbf{W}_1$. $p_{r,l,i}^{(WB)}$ is first amplitude information of an $i^{th}$ column vector (or beam) of $\tilde{\mathbf{w}}$ in $\mathbf{W}_1$ reported by the terminal device by using a wideband, in an $r^{th}$ polarization direction of $\mathbf{W}$ or $\mathbf{W}_2$, and in an $l^{th}$ column of $\mathbf{W}$ or $\mathbf{W}_2$. $p_{r,l,i}^{(SB)}$ is second amplitude information of an $i^{th}$ column vector (or beam) of $\tilde{\mathbf{w}}$ in $\mathbf{W}_1$ reported by the terminal device by using a subband, in an $r^{th}$ polarization direction, and in an $l^{th}$ column of $\mathbf{W}$ or $\mathbf{W}_1$. $c_{r,l,i}$ is phase information of an $i^{th}$ column vector (or beam) of $\tilde{\mathbf{w}}$ in $\mathbf{W}_1$, in an $r^{th}$ polarization direction, and in an $l^{th}$ column of $\mathbf{W}$ or $\mathbf{W}_2$. After the terminal device determines $\mathbf{W}_1$ and $\mathbf{W}_2$, the base station searches a preset codebook for a matrix most approximate to $\mathbf{W}_2$ based on $\mathbf{W}^2$, uses an index of the matrix as index information of $\mathbf{W}_2$, and reports the index to the base station. It should be noted that a quantity of matrices in the preset codebook is related to a quantity of columns of $\mathbf{W}_2$. A larger quantity of columns of $\mathbf{W}_2$ (namely, a larger quantity of elements in $\mathbf{W}_2$) indicates a larger quantity of matrices in the preset codebook. Therefore, when $\mathbf{W}_2$ used by the terminal device is indicated to the base station, increasingly more bits are required for the index information of $\mathbf{W}_2$.

Therefore, in the foregoing feedback manner, when the rank of the determined precoding matrix is greater than 2, if the terminal device continues to use the foregoing feedback manner, feedback overheads of the terminal device are relatively high, causing a great uplink resource waste.

## SUMMARY

This application provides a channel state information transmission method, an access network device, and a terminal device, to resolve a prior-art technical problem of a great uplink resource waste caused by high feedback overheads of a terminal device when a rank of a precoding matrix is greater than 2.

According to a first aspect, this application provides a channel state information transmission method, including:

receiving, by an access network device, channel state information CSI reported by a terminal device, where the CSI includes a first precoding matrix indication PMI and a second PMI; and

determining, by the access network device, a precoding matrix $\mathbf{W}$ based on the first PMI, the second PMI, and a preset codebook, where $\mathbf{W}$ meets $\mathbf{W} = \mathbf{W}_1 \times \mathbf{W}_2$, $\mathbf{W}_1$ corresponds to the first PMI, $\mathbf{W}_2$ corresponds to the second PMI, the second PMI indicates some column vectors of $\mathbf{W}_2$ and an amplitude association relationship between the some column vectors of $\mathbf{W}_2$ and remaining column vectors of $\mathbf{W}_2$, and a quantity of columns of $\mathbf{W}$ is greater than 2.

According to a second aspect, this application provides a channel state information transmission method, including:

determining, by a terminal device, a precoding matrix $\mathbf{W}$ based on a reference signal delivered by an access network device, where $\mathbf{W}$ meets $\mathbf{W} = \mathbf{W}_1 \times \mathbf{W}_2$ ; and

sending, by the terminal device, channel state information CSI to the access network device, where the CSI includes a first precoding matrix indication PMI and a second PMI, $\mathbf{W}_1$ corresponds to the first PMI, $\mathbf{W}_2$ corresponds to the second PMI, the second PMI indicates some column vectors of $\mathbf{W}_2$ and an amplitude association relationship between the some column vectors of $\mathbf{W}_2$ and remaining column vectors of $\mathbf{W}_2$, and a quantity of columns of $\mathbf{W}$ is greater than 2.

According to the channel state information transmission methods provided in the first aspect and the second aspect, after determining the precoding matrix $\mathbf{W}$ ($\mathbf{W} = \mathbf{W}_1 \times \mathbf{W}_2$), the terminal device may send, to the access network device based on $\mathbf{W}$, the CSI including the first PMI and the second PMI. The second PMI is used to indicate only the some column vectors of $\mathbf{W}_2$ and the amplitude association relationship between the some column vectors of $\mathbf{W}_2$ and the remaining column vectors of $\mathbf{W}_2$, and therefore the some column vectors of $\mathbf{W}_2$ correspond to a relatively small quantity of first matrices in a second codebook. The terminal device may use the second PMI with a relatively small quantity of bits, so that the access network device can determine $\mathbf{W}_2$. The second PMI does not need to indicate all column vectors of $\mathbf{W}_2$ to the access network device in this embodiment, so that the second PMI occupies a small quantity of bits, to effectively reduce overheads for feeding back the CSI by the terminal device to the access network device, and avoid an uplink resource waste.

In addition, in the channel state information transmission methods provided in the first aspect and the second aspect, when the access network device performs multi-user pairing on the terminal device, rollback to a low-precision codebook does not need to be performed. In the prior art, when ranks of $\mathbf{W}_2$ are a rank 1 and a rank 2, codebooks corresponding to $\mathbf{W}_2$ are all high-precision codebooks. To be specific, matrices in the high-precision codebooks each include amplitude information and phase information of a linear weighted value of $\mathbf{W}_1$. When the rank of $\mathbf{W}_2$ is greater than 2, codebooks corresponding to $\mathbf{W}_2$ are all low-precision codebooks. In this way, when multi-user pairing is performed on the terminal device in the prior art, two terminal devices are used as an example, and details are as follows:

When the multi-user pairing is not performed on the terminal device, it is assumed that each terminal device can transmit a maximum of four spatial flows (or layers) on a time-frequency resource. Therefore, when a rank (rank) reported by the terminal device to the access network device is equal to 4, the access network device may obtain $\mathbf{W}_2$ from a low-precision codebook corresponding to the rank 4. When the access network device needs to perform the multi-user pairing on the terminal device, to be specific, in the foregoing example of the two terminal devices, when the multi-user pairing indicates that the two terminal devices share one time-frequency resource, a maximum of four spatial flows (or layers) can be transmitted on the time-frequency resource, and therefore, at least one UE has a maximum of two transport layers. Therefore, when the ranks reported by the two paired terminal users are both 4, the base station needs to select two columns from a low-precision codebook fed back by the at least one UE, to precode data. Therefore, a precoding matrix used by the data is selected from the low-precision codebook, to be specific, during MU pairing, rollback to the low-precision codebook is performed when a high rank (in other words, the rank > 2) is rolled back to the rank 1 or 2.

However, in the solution provided in Embodiment 1, in this embodiment of this application, the second PMI carries the some column vectors of $\mathbf{W}_2$ and the amplitude association relationship between the some column vectors and the remaining column vectors of $\mathbf{W}_2$. Therefore, when the multi-user pairing is not performed on the terminal device, the second PMI reported by the terminal device to the access network device indicates the some column vectors of $\mathbf{W}_2$. It is assumed that the some column vectors are the first two column vectors of $\mathbf{W}_2$. Therefore, the access network device can find the first two column vectors from the high-precision codebook corresponding to the rank 2, and then obtain high-precision $\mathbf{W}_2$ based on the foregoing amplitude association relationship. When the access network device needs to pair two terminal devices by using the terminal device, and a high rank is rolled back to a low rank, for example, when the rank 4 is rolled back to the rank 2, the base station may select two columns from the high-precision codebook, and use the two columns as a precoding matrix used by one UE, and the precoding matrix is high precision. Therefore, in the solution in this embodiment of this application, when rollback to the rank 1/2 is performed, high-precision precoding matrix is still obtained, and system performance is improved.

With reference to the first aspect and the second aspect, in a possible design, the amplitude association relationship between the some column vectors of $\mathbf{W}_2$ and the remaining column vectors of $\mathbf{W}_2$ specifically includes that amplitudes of the first $\left\lceil \frac{N}{2} \right\rceil$ column vectors of $\mathbf{W}_2$ are related to amplitudes of the last $(N - \left\lceil \frac{N}{2} \right\rceil)$ column vectors of $\mathbf{W}_2$, and N is a quantity of columns of $\mathbf{W}_2$.

In a possible design, that amplitudes of the first $\left\lceil \frac{N}{2} \right\rceil$ column vectors of $\mathbf{W}_2$ are related to amplitudes of the last $(N - \left\lceil \frac{N}{2} \right\rceil)$ column vectors of $\mathbf{W}_2$ specifically includes that

amplitudes of a $(k + \left\lceil \frac{N}{2} \right\rceil)^{th}$ column vector of $\mathbf{W}_2$ in a first polarization direction of $\mathbf{W}_2$ are related to amplitudes of a $k^{th}$ column vector of $\mathbf{W}_2$ in a second polarization direction of $\mathbf{W}_2$, and amplitudes of the $(k + \left\lceil \frac{N}{2} \right\rceil)^{th}$ column vector of $\mathbf{W}_2$ in the second polarization direction of $\mathbf{W}_2$ are related to amplitudes of the $k^{th}$ column vector of $\mathbf{W}_2$ in the first polarization direction of $\mathbf{W}_2$; and

polarization directions of $\mathbf{W}_2$ include the first polarization direction and the second polarization direction, k is a positive integer in $[1, \left\lceil \frac{N}{2} \right\rceil]$, the first $\frac{M}{2}$ rows of $\mathbf{W}_2$ are the first polarization direction of $\mathbf{W}_2$, the last $\frac{M}{2}$ rows of $\mathbf{W}_2$ are the second polarization direction of $\mathbf{W}_2$, and M is a quantity of rows of $\mathbf{W}_2$.

In a possible design, that amplitudes of a $(k + \left\lceil \frac{N}{2} \right\rceil)^{th}$ column vector of $\mathbf{W}_2$ in a first polarization direction of $\mathbf{W}_2$ are related to amplitudes of a $k^{th}$ column vector of $\mathbf{W}_2$ in a second polarization direction of $\mathbf{W}_2$ specifically includes that

the amplitudes of the $(k + \left\lceil \frac{N}{2} \right\rceil)^{th}$ column vector of $\mathbf{W}_2$ in the first polarization direction of $\mathbf{W}_2$ are equal to the amplitudes of the $k^{th}$ column vector of $\mathbf{W}_2$ in the second polarization direction of $\mathbf{W}_2$, and a sequence of the amplitudes of the $(k + \left\lceil \frac{N}{2} \right\rceil)^{th}$ column vector in the first polarization direction of $\mathbf{W}_2$ is the same as a sequence of the amplitudes of the $k^{th}$ column vector in the second polarization direction of $\mathbf{W}_2$; and

that amplitudes of a $(k + \left\lceil \frac{N}{2} \right\rceil)^{th}$ column vector of $\mathbf{W}_2$ in a second polarization direction of $\mathbf{W}_2$ are related to amplitudes of a $k^{th}$ column vector of $\mathbf{W}_2$ $\mathbf{W}_2$ in a first polarization direction of $\mathbf{W}_2$ specifically includes that

the amplitudes of the $(k + \lceil \frac{N}{2} \rceil)^{th}$ column vector of $\mathbf{W}_2$ in the second polarization direction of $\mathbf{W}_2$ are equal to the amplitudes of the $k^{th}$ column vector of $\mathbf{W}_2$ in the first polarization direction of $\mathbf{W}_2$, and a sequence of the amplitudes of the $(k + \lceil \frac{N}{2} \rceil)^{th}$ column vector in the second polarization direction of $\mathbf{W}_2$ is the same as a sequence of the amplitudes of the $k^{th}$ column vector in the first polarization direction of $\mathbf{W}_2$.

In a possible design, the second PMI is further used to indicate a phase association relationship between the some column vectors of $\mathbf{W}_2$ and the remaining column vectors of $\mathbf{W}_2$.

In a possible design, the phase association relationship between the some column vectors of $\mathbf{W}_2$ and the remaining column vectors of $\mathbf{W}_2$ specifically includes that

phases of the first $\lceil \frac{N}{2} \rceil$ column vectors of $\mathbf{W}_2$ are related to phases of the last $(N - \lceil \frac{N}{2} \rceil)$ column vectors of $\mathbf{W}_2$.

In a possible design, that phases of the first $\lceil \frac{N}{2} \rceil$ column vectors of $\mathbf{W}_2$ are related to phases of the last $(N - \lceil \frac{N}{2} \rceil)$ column vectors of $\mathbf{W}_2$ specifically includes that

phases of a $(k + \lceil \frac{N}{2} \rceil)^{th}$ column vector of $\mathbf{W}_2$ in a first polarization direction of $\mathbf{W}_2$ are related to phases of a $k^{th}$ column vector of $\mathbf{W}_2$ in a first polarization direction of $\mathbf{W}_2$, and phases of the $(k + \lceil \frac{N}{2} \rceil)^{th}$ column vector of $\mathbf{W}_2$ in the second polarization direction of $\mathbf{W}_2$ are related to phases of the $k^{th}$ column vector of $\mathbf{W}2$ in the second polarization direction of $\mathbf{W}_2$; or

phases of a $(k + \lceil \frac{N}{2} \rceil)^{th}$ column vector of $\mathbf{W}_2$ in a first polarization direction of $\mathbf{W}_2$ are related to phases of a $k^{th}$ column vector of $\mathbf{W}_2$ in a second polarization direction of $\mathbf{W}_2$, and phases of the $(k + \lceil \frac{N}{2} \rceil)^{th}$ column vector of $\mathbf{W}_2$ in the second polarization direction of $\mathbf{W}_2$ are related to phases of the $k^{th}$ column vector of $\mathbf{W}_2$ in the first polarization direction of $\mathbf{W}_2$; and

polarization directions of $\mathbf{W}_2$ include the first polarization direction and the second polarization direction, k is a positive integer in $[1, \lceil \frac{N}{2} \rceil]$, the first $\frac{M}{2}$ rows of $\mathbf{W}_2$ are the first polarization direction of $\mathbf{W}_2$, the last $\frac{M}{2}$ rows of $\mathbf{W}_2$ are the second polarization direction of $\mathbf{W}_2$, and M is a quantity of rows of $\mathbf{W}_2$.

In a possible design, that phases of a $(k + \lceil \frac{N}{2} \rceil)^{th}$ column vector of $\mathbf{W}_2$ in a first polarization direction of $\mathbf{W}_2$ are related to phases of a $k^{th}$ column vector of $\mathbf{W}_2$ in a first polarization direction of $\mathbf{W}_2$, and phases of the

$(k + \lceil \frac{N}{2} \rceil)^{th}$ column vector of $\mathbf{W}_2$ in the second polarization direction of $\mathbf{W}_2$ are related to phases of the $k^{th}$ column vector of $\mathbf{W}_2$ in the second polarization direction of $\mathbf{W}_2$ specifically includes that

a phase of an element in a $y^{th}$ row in the first polarization direction of the $k^{th}$ column vector of $\mathbf{W}_2$ is rotated by an angle of $a_y$, to obtain a phase of an element in a $y^{th}$ row in the first polarization direction of the $(k + \lceil \frac{N}{2} \rceil)^{th}$ column vector of $\mathbf{W}_2$; and

a phase of an element in a $y^{th}$ row in the second polarization direction of the $k^{th}$ column vector of $\mathbf{W}_2$ is rotated by an angle of $b_y$, to obtain a phase of an element in a $y^{th}$ row in the second polarization direction of the $(k + \lceil \frac{N}{2} \rceil)^{th}$ column vector of $\mathbf{W}_2$, where

$a_y$ and $b_y$ meet $|a_y - b_y| \bmod(2\pi) = \pi$, $(x)\bmod(2\pi)$ indicates that a remainder is obtained by dividing $x$ by $2\pi$, a value range

of $a_y$ or $b_y$ is $[0, 2\pi)$, and $y = 1, ..., \frac{M}{2}$.

In a possible design, that phases of a $(k + \lceil \frac{N}{2} \rceil)^{th}$ column vector of $\mathbf{W}_2$ in a first polarization direction of $\mathbf{W}_2$ are related to phases of a $k^{th}$ column vector of $\mathbf{W}_2$ in a second polarization direction of $\mathbf{W}_2$, and phases of the

$(k + \lceil \frac{N}{2} \rceil)^{th}$ column vector of $\mathbf{W}_2$ in the second polarization direction of $\mathbf{W}_2$ are related to phases of the $k^{th}$ column vector of $\mathbf{W}_2$ in the first polarization direction of $\mathbf{W}_2$ specifically includes that

a phase of an element in a $y^{th}$ row in the first polarization direction of the $k^{th}$ column vector of $\mathbf{W}_2$ is conjugated and rotated by an angle of $a_y$, to obtain a phase of an element in a $y^{th}$ row in the second polarization direction of the

$(k + \lceil \frac{N}{2} \rceil)^{th}$ column vector of $\mathbf{W}_2$; and

a phase of an element in a $y^{th}$ row in the second polarization direction of the $k^{th}$ column vector of $\mathbf{W}_2$ is conjugated and

rotated by an angle of $b_y$, to obtain a phase of an element in a $y^{th}$ row in the first polarization direction of the $(k + \lceil \frac{N}{2} \rceil)^{th}$ column vector of $\mathbf{W}_2$, where

$a_y$ and $b_y$ meet $|a_y - b_y| \bmod(2\pi) = \pi$, $(x)\bmod(2\pi)$ indicates that a remainder is obtained by dividing $x$ by $2\pi$, a value range

of $a_y$ or $b_y$ is $[0, 2\pi)$, and $y = 1, ..., \frac{M}{2}$.

With reference to the methods provided in the possible designs, the terminal device may send, to the access network device, the CSI including the first PMI and the second PMI. The second PMI is used to indicate only the some column vectors of $\mathbf{W}_2$ and the amplitude association relationship and the phase association relationship between the some column vectors of $\mathbf{W}_2$ and the remaining column vectors of $\mathbf{W}_2$, and therefore the some column vectors of $\mathbf{W}_2$ correspond to a relatively small quantity of first matrices in the second codebook. The terminal device may use the second PMI with a relatively small quantity of bits, so that the access network device can determine $\mathbf{W}_2$. The second PMI does not need to indicate all column vectors of $\mathbf{W}_2$ to the access network device in this embodiment, so that the second PMI occupies a small quantity of bits, to effectively reduce overheads for feeding back the CSI by the terminal device to the access network device, and avoid an uplink resource waste. In addition, in this optional manner, the access

network device determines $\mathbf{W}_2$ more accurately based on content indicated by the second PMI.

According to a third aspect, this application provides an access network device, including a unit or a means (means) configured to perform steps in the first aspect.

According to a fourth aspect, this application provides a terminal device, including a unit or a means (means) configured to perform steps in the second aspect.

According to a fifth aspect, this application provides an access network device, including at least one processing element and at least one storage element. The at least one storage element is configured to store a program and data, and the at least one processing element is configured to perform the method provided in the first aspect of this application.

According to a sixth aspect, this application provides a terminal device, including at least one processing element and at least one storage element. The at least one storage element is configured to store a program and data, and the at least one processing element is configured to perform the method provided in the second aspect of this application.

According to a seventh aspect, this application provides an access network device, including at least one processing element (or chip) configured to perform the method according to the first aspect.

According to an eighth aspect, this application provides a terminal device, including at least one processing element (or chip) configured to perform the method according to the second aspect.

According to a ninth aspect, this application provides an information state information processing program, and when the program is executed by a processor, the processor is configured to perform the method according to the first aspect.

According to a tenth aspect, this application provides an information state information processing program, and when the program is executed by a processor, the processor is configured to perform the method according to the second aspect.

According to an eleventh aspect, this application provides a program product, for example, a computer readable storage medium, which includes the program in the ninth aspect.

According to a twelfth aspect, this application provides a program product, for example, a computer readable storage medium, which includes the program in the tenth aspect.

Compared with the prior art, after determining the precoding matrix $\mathbf{W}$ ($\mathbf{W} = \mathbf{W}_1 \times \mathbf{W}_2$), the terminal device may send, to the access network device based on $\mathbf{W}$, the CSI including the first PMI and the second PMI. The second PMI is used to indicate only the some column vectors of $\mathbf{W}_2$ and the amplitude association relationship between the some column vectors of $\mathbf{W}_2$ and the remaining column vectors of $\mathbf{W}_2$, and therefore the some column vectors of $\mathbf{W}_2$ correspond to a relatively small quantity of first matrices in the second codebook. The terminal device may use the second PMI with a relatively small quantity of bits, so that the access network device can determine $\mathbf{W}_2$. The second PMI does not need to indicate all column vectors of $\mathbf{W}_2$ to the access network device in this embodiment, so that the second PMI occupies a small quantity of bits, to effectively reduce overheads for feeding back the CSI by the terminal device to the access network device, and avoid an uplink resource waste.

## BRIEF DESCRIPTION OF DRAWINGS

FIG. 1 is a schematic architectural diagram of a communications system according to this application;
FIG. 2 is a schematic signaling flowchart of a channel state information transmission method according to an embodiment of this application;
FIG. 3 is a schematic structural diagram of an embodiment of an access network device according to an embodiment of the present invention;
FIG. 4 is a schematic structural diagram of an embodiment of a terminal device according to an embodiment of the present invention;
FIG. 5 is a schematic structural diagram of another embodiment of an access network device according to an embodiment of the present invention; and
FIG. 6 is a schematic structural diagram of another embodiment of a terminal device according to an embodiment of the present invention.

## DESCRIPTION OF EMBODIMENTS

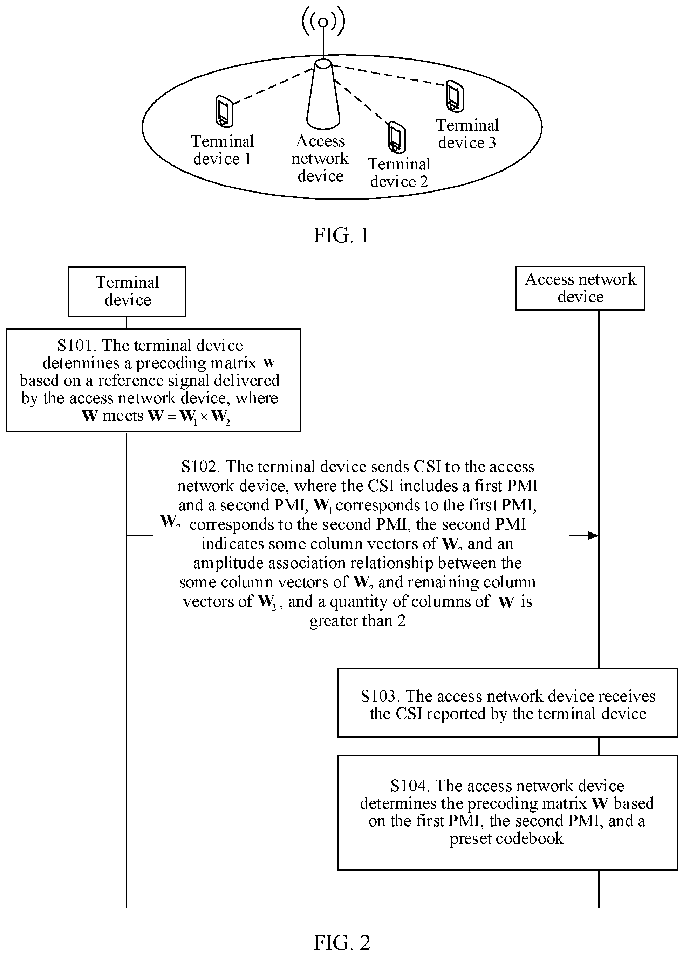

A channel state information transmission method in the embodiments of this application may be applied to a schematic architectural diagram of a communications system shown in FIG. 1. The communications system may be applied to an FDD-LTE system, or may be applied to a 4.5G or a future 5G communications system. A type of the communications system is not limited in the embodiments of this application. As shown in FIG. 1, the communications system includes an access network device and at least one terminal device. The access network device is located in an access network, and provides a network service for a terminal device covered by the access network device. Optionally, the access network device may be a base station, or may be another device that is in the access network and that can provide an access network service for the terminal device. Optionally, the base station in this application may be a device that communicates with a wireless terminal over an air interface in the access network by using one or more sectors. The base station may be configured to mutually convert a received over-the-air frame and an IP packet and serve as a router between a wireless terminal and a remaining portion of the access network, and the remaining portion of the access network may include an internet protocol (IP) network. The base station may further coordinate attribute management of the air interface. For example, the base station may be an evolved NodeB (NodeB, eNB, or e-NodeB, evolutional Node B) in LTE.

In addition, the terminal device in this application may be a wireless terminal device or a wired terminal device. The wireless terminal may be a handheld device with a wireless connection function, another processing device connected to a wireless modem, or a mobile terminal that communicates with one or more core networks by using a radio access network. For example, the wireless terminal may be a mobile phone (also referred to as a "cellular" phone) and a computer with a mobile terminal. For another example, the wireless terminal may be a portable, pocket-sized, handheld, computer built-in, or in-vehicle mobile apparatus.

In the foregoing process in which the access network device and the terminal device perform data transmission or information transmission, the access network device usually needs to learn of channel state information (CSI) of downlink channel. Therefore, the access network device sends a reference signal to the terminal device, and the terminal device performs channel estimation by using the reference signal, to obtain the CSI of the downlink channel, and feeds back the CSI to the access network device, so that the access network device can perform resource scheduling, data transmission, and the like based on the CSI of the downlink channel. For example, the terminal device sends a PMI to the network device, and the network device may select a corresponding precoding matrix from a codebook based on the PMI, and further precode to-be-sent downlink data by using the precoding matrix, to improve downlink communication quality.

Currently, to improve CSI feedback precision of the terminal device, the following method is used in the prior art: The terminal device feeds back the CSI to the base station by using a two-level feedback mechanism ($\mathbf{W} = \mathbf{W}_1 \times \mathbf{W}_2$). After the terminal device determines $\mathbf{W}_1$ and $\mathbf{W}_2$, the base station searches, based on $\mathbf{W}_2$, a preset codebook for a matrix most approximate to $\mathbf{W}_2$, uses an index of the matrix as index information of $\mathbf{W}_2$, and reports the index to the base station $\mathbf{W}_2$. It should be noted that a quantity of matrices in the preset codebook is related to a quantity of columns of $\mathbf{W}_2$. A larger quantity of columns of $\mathbf{W}_2$ (a larger quantity of elements in $\mathbf{W}_2$) indicates a larger quantity of matrices in the preset codebook set. Therefore, when $\mathbf{W}_2$ used by the terminal device is indicated to the base station, increasingly more bits are required for the index information of $\mathbf{W}_2$.

Therefore, in the foregoing feedback manner, when a rank of the determined precoding matrix is greater than 2, if the terminal device continues to use the foregoing feedback manner, feedback overheads of the terminal device are relatively high, causing a great uplink resource waste.

A channel state information transmission method, an access network device, and a terminal device provided in the embodiments of this application are intended to resolve the foregoing technical problem in the prior art.

The following describes the technical solutions of this application in detail by using specific embodiments. The following several specific embodiments may be combined with one another. Same or similar concepts or processes may not be described in detail in some embodiments.

FIG. 2 is a schematic signaling flowchart of a channel state information transmission method according to an embodiment of this application. This embodiment relates to a specific process in which a terminal device indicates, to a base station by using a second PMI, some column vectors of $\mathbf{W}_2$ and an amplitude association relationship between the some column vectors of $\mathbf{W}_2$ and remaining column vectors of $\mathbf{W}_2$, so that the base station determines a precoding matrix $\mathbf{W}$ by using a first PMI and the second PMI that are reported by the terminal device, to reduce feedback overheads of the terminal device. As shown in FIG. 2, the method includes the following steps:

S101. The terminal device determines the precoding matrix $\mathbf{W}$ based on a reference signal delivered by an access network device, where $\mathbf{W}$ meets $\mathbf{W} = \mathbf{W}_1 \times \mathbf{W}_2$.

Specifically, when the access network device needs to send downlink data t to the terminal device, the access network device sends the reference signal to the terminal device in advance, and the terminal device may determine the precoding matrix $\mathbf{W}$ based on the reference signal. $\mathbf{W}$ meets $\mathbf{W} = \mathbf{W}_1 \times \mathbf{W}_2$, $\mathbf{W}_1$ is a first-level feedback matrix, and $\mathbf{W}_2$ is a second-level feedback matrix. In this embodiment of this application, a rank of the precoding matrix $\mathbf{W}$ is greater than or equal to 2. In other words, the rank of the precoding matrix $\mathbf{W}$ may be a quantity of columns of $\mathbf{W}$. Correspondingly, in this embodiment of this application, a quantity of columns of $\mathbf{W}_2$ is also greater than or equal to 2, and is equal to the rank of the precoding matrix $\mathbf{W}$.

In addition, for a specific process in which the terminal device determines the precoding matrix $\mathbf{W}$ based on the reference signal, refer to descriptions in the prior art. Details are not described herein.

S102. The terminal device sends channel state information CSI to the access network device, where the CSI includes the first precoding matrix indication PMI and the second PMI, $W_1$ corresponds to the first PMI, $W_2$ corresponds to the second PMI, the second PMI indicates the some column vectors of $W_2$ and the amplitude association relationship between the some column vectors of $W_2$ and the remaining column vectors of $W_2$, and the quantity of columns of $W_2$ is greater than 2.

Specifically, after the terminal device determines the precoding matrix $W$, the terminal device may determine $W_2$ and $W_2$ based on $W$, to send the CSI to the access network device based on $W_1$ and $W_2$. In this embodiment, $W_2$ includes amplitude and phase information of linear weighted values of column vectors of. $W_1$ Optionally, the terminal device may determine, according to a receiver algorithm such as a minimum mean square error (Minimum Mean-Squared Error Equalizer, MMSE for short) and a criterion such as throughput maximization or signal to interference plus noise ratio (Signal to Interference plus Noise Ratio, SINR) maximization, to send the CSI. The first PMI includes indexes of the column vectors of $W_1$. Optionally, the second PMI may indicate the some column vectors of $W_2$ and the amplitude association relationship between the some column vectors of $W_2$ and the remaining column vectors of $W_2$. Optionally, the second PMI may include an index corresponding to a matrix including the some column vectors. Optionally, the second PMI may alternatively be one or more pieces of pure identification information, for example, one identification character. The some column vectors of $W_2$ are notified by using the identification information. How the second PMI indicates the some column vectors of $W_2$ is not limited in this embodiment of this application.

Optionally, the terminal device may determine the first PMI and the second PMI in the following possible implementations:

A first codebook is preset on a terminal device side, and the first codebook indicates a correspondence between the column vectors of $W_1$ and the indexes of the column vectors of $W_1$. A second codebook is further preset on the terminal device side, and the second codebook indicates a correspondence between a plurality of first matrices and indexes of the first matrices. The two correspondences may be in any form (for example, in a form of a table). It should be noted that a quantity of first matrices in the foregoing codebook depends on a quantity of elements in $W_2$ indicated by the terminal device to the access network device or the rank of $W$.

Therefore, when the terminal device determines $W_1$ and $W_2$, the terminal device may determine, based on the first codebook, an index of a matrix most approximate to $W_1$, use the index as the first PMI of $W_1$, and report the index to the base station $W_1$. When a rank of $W_2$ is greater than 2, the terminal device indicates, to the base station, the some column vectors of $W_2$ and the amplitude association relationship between the some column vectors of $W_2$ and the remaining column vectors of $W_2$. Optionally, the amplitude association relationship between the some column vectors of $W_2$ and the remaining column vectors of $W_2$ may be an amplitude association relationship between two adjacent column vectors in $W_2$. The some column vectors of $W_2$ may form "new $W_2$". Because a quantity of elements in "new $W_2$ $W_2$" is less than a quantity of elements in $W_2$, the quantity of first matrices in the second codebook is relatively small. Optionally, the terminal device may search the second codebook for a matrix most approximate to "new $W_2$", add an index of the matrix to the second PMI, and report the second PMI to the access network device. Because there is a small quantity of first matrices in the second codebook, the terminal device can indicate, to the access network device only by using the second PMI with a relatively small quantity of bits, "new $W_2$" used by the terminal device, so that the access network device can obtain $W_2$ based on "new $W_2$" and the amplitude association relationship between "new $W_2$" (namely, the some column vectors of $W_2$) and the remaining column vectors of $W_2$. In other words, the terminal device only needs to use the second PMI with a relatively small quantity of bits, so that the access network device can obtain $W_2$.

In the prior art, when indicating $W_2$ to the base station by using the second PMI, the terminal device indicates all elements in $W_2$. Therefore, as the quantity of elements in $W_2$ increases, the quantity of first matrices in the second codebook also increases gradually. If the terminal device needs to indicate, to the access network device, $W_2$ used by the terminal device, the second PMI reported by the terminal device needs to occupy a relatively large quantity of bits. However, in this application, when the rank of $W_2$ is greater than 2, the terminal device indicates only the some column vectors (namely, "new $W_2$") of $W_2$ to the access network device. During indication, a quantity of elements in the some column vectors is less than the quantity of elements in $W_2$, and therefore the some column vectors correspond to a small quantity of first matrices in the second codebook. When the terminal device indicates, to the access network device, "new $W_2$" used by the terminal device, the second PMI occupies a small quantity of bits. Therefore, after receiving the second PMI, the access network device may obtain $W_2$ with reference to the second PMI and a preset codebook. For a specific process, refer to the following steps.

Therefore, it can be learned from the foregoing descriptions that $W_2$ the terminal device only needs to use the second PMI with a relatively small quantity of bits, so that the access network device can learn of $W_2$. Therefore, overheads for feeding back the CSI by the terminal device to the access network device are effectively reduced, and an uplink resource waste is avoided.

In addition, that "$W_1$ corresponds to the first PMI and $W_2$ corresponds to the second PMI" described above specifically means that $W_1$ may be determined based on the first PMI, and $W_2$ may be determined based on the second PMI.

S103. The access network device receives the CSI reported by the terminal device.

S104. The access network device determines the precoding matrix $\mathbf{W}$ based on the first PMI, the second PMI, and the preset codebook.

Specifically, the preset codebook is also preset on an access network device side, and the preset codebook includes the first codebook and the second codebook on the terminal device side. After the access network device receives the first PMI and the second PMI that are reported by the terminal device, the access network device may select $\mathbf{W}_1$ from the first codebook based on the first PMI. In addition, after the access network device receives the second PMI, the access network device may determine the some column vectors of $\mathbf{W}_2$ from the second codebook based on the second PMI, and then construct the remaining column vectors of $\mathbf{W}_2$ based on the amplitude association relationship between the some column vectors indicated by the second PMI and the remaining column vectors of $\mathbf{W}_2$, to obtain $\mathbf{W}_2$. Finally, the access network device determines the precoding matrix $\mathbf{W}$ based on obtained $\mathbf{W}_1$ and $\mathbf{W}_2$ and $\mathbf{W} = \mathbf{W}_1 \times \mathbf{W}_2$.

It should be noted that, in this embodiment, amplitudes of the remaining column vectors of $\mathbf{W}_2$ are related to amplitudes of the some column vectors of $\mathbf{W}_2$ that are indicated by the second PMI. Optionally, the remaining column vectors of $\mathbf{W}_2$ and the some column vectors of $\mathbf{W}_2$ that are indicated by the second PMI also meet an orthogonal relationship. In addition, in this embodiment, because the elements in $\mathbf{W}_2$ include amplitudes and phases of the linear weighted values of the column vectors of $\mathbf{W}_1$, "amplitudes of column vectors of $\mathbf{W}_2$" in this embodiment are amplitudes of elements in $\mathbf{W}_2$.

It can be learned from the foregoing descriptions that, after determining the precoding matrix $\mathbf{W}$ ($\mathbf{W} = \mathbf{W}_1 \times \mathbf{W}_2$), the terminal device may send, to the access network device based on $\mathbf{W}$, the CSI including the first PMI and the second PMI. The second PMI is used to indicate only the some column vectors of $\mathbf{W}_2$ and the amplitude association relationship between the some column vectors of $\mathbf{W}_2$ and the remaining column vectors of $\mathbf{W}_2$, and therefore the some column vectors of $\mathbf{W}_2$ correspond to a relatively small quantity of first matrices in the second codebook. The terminal device may use the second PMI with a relatively small quantity of bits, so that the access network device can determine $\mathbf{W}_2$. The second PMI in this embodiment does not need to indicate all column vectors of $\mathbf{W}_2$ to the access network device, so that the second PMI occupies a small quantity of bits, to effectively reduce overheads for feeding back the CSI by the terminal device to the access network device, and avoid an uplink resource waste.

In addition, in the technical solution of Embodiment 1, when the access network device performs multi-user pairing on the terminal device, rollback to a low-precision codebook does not need to be performed. In the prior art, when the rank of $\mathbf{W}_2$ are a rank 1 and a rank 2, codebooks corresponding to $\mathbf{W}_2$ are all high-precision codebooks. To be specific, matrices in the high-precision codebooks each include the amplitude information and phase information of the linear weighted value of $\mathbf{W}_2$. When the rank of $\mathbf{W}_2$ is greater than 2, codebooks corresponding to $\mathbf{W}_2$ are all low-precision codebooks. In this way, when multi-user pairing is performed on the terminal device in the prior art, two terminal devices are used as an example, and details are as follows:

When the multi-user pairing is not performed on the terminal device, it is assumed that each terminal device can transmit a maximum of four spatial flows (or layers) on a time-frequency resource. Therefore, when a rank (rank) reported by the terminal device to the access network device is equal to 4, the access network device may obtain $\mathbf{W}_2$ from a low-precision codebook corresponding to the rank 4. When the access network device needs to perform the multi-user pairing on the terminal device, to be specific, in the foregoing example of the two terminal devices, when the multi-user pairing indicates that the two terminal devices share one time-frequency resource, a maximum of four spatial flows (or layers) can be transmitted on the time-frequency resource, and therefore, at least one UE has a maximum of two transport layers. Therefore, when the ranks reported by the two paired terminal users are both 4, the base station needs to find and select two columns from a low-precision codebook fed back by the at least one UE, to precode data. Therefore, a precoding matrix used by the data is selected from the low-precision codebook, to be specific, during MU pairing, rollback to the low-precision codebook is performed when a high rank (in other words, the rank > 2) is rolled back to the rank 1 or 2.

However, in the solution provided in Embodiment 1, in this embodiment of this application, the second PMI carries the some column vectors of $\mathbf{W}_2$ and the amplitude association relationship between the some column vectors and the remaining column vectors of $\mathbf{W}_2$. Therefore, when the multi-user pairing is not performed on the terminal device, the second PMI reported by the terminal device to the access network device indicates the some column vectors of $\mathbf{W}_2$. It is assumed that the some column vectors are the first two column vectors of $\mathbf{W}_2$. Therefore, the access network device can find the first two column vectors from the high-precision codebook corresponding to the rank 2, and then obtain high-precision $\mathbf{W}_2$ based on the foregoing amplitude association relationship. When the access network device needs to pair two terminal devices by using the terminal device, and a high rank is rolled back to a low rank, for example, when the rank 4 is rolled back to the rank 2, the base station may select two columns from the high-precision codebook, and use the two columns as a precoding matrix used by one UE, and the precoding matrix is high precision. Therefore, in the solution in this embodiment of this application, when rollback to the rank 1/2 is performed, high-precision precoding matrix is still obtained, and system performance is improved.

Optionally, based on Embodiment 1, the second PMI may be further used to indicate a phase association relationship between the some column vectors of $\mathbf{W}_2$ and the remaining column vectors of $\mathbf{W}_2$.

Specifically, in this optional manner, after the terminal device obtains the precoding matrix **W**, the terminal device may determine $\mathbf{W}_1$ and $\mathbf{W}_2$, and $\mathbf{W}_2$ is known to the terminal device. There is not only the amplitude association relationship but also the phase association relationship between the some column vectors of $\mathbf{W}_2$ and the remaining column vectors of $\mathbf{W}_2$. Based on the amplitude association relationship and the phase association relationship, when the some column vectors of $\mathbf{W}_2$ and the remaining column vectors of $\mathbf{W}_2$ meet both the amplitude association relationship and the phase association relationship, it indicates that the some column vectors of $\mathbf{W}_2$ are orthogonal to the remaining column vectors of $\mathbf{W}_2$.

Therefore, after determining $\mathbf{W}_2$, the terminal device can not only indicate, to the access network device, the some column vectors of $\mathbf{W}_2$ and the amplitude association relationship between the some column vectors of $\mathbf{W}_2$ and the remaining column vectors of $\mathbf{W}_2$ by using the second PMI, but also indicate the phase association relationship between the some column vectors of $\mathbf{W}_2$ and the remaining column vectors of $\mathbf{W}_2$ to the access network device. Therefore, when receiving the first PMI and the second PMI, the access network device may determine $\mathbf{W}_1$ based on the first codebook in the preset codebook and the first PMI, determine the some column vectors of $\mathbf{W}_2$ based on the second codebook in the preset codebook and the second PMI, then obtain $\mathbf{W}_2$ with reference to the some column vectors of $\mathbf{W}_2$ and the foregoing amplitude association relationship and the phase association relationship, and finally determine the precoding matrix **W** based on obtained $\mathbf{W}_1$ and $\mathbf{W}_2$ and $\mathbf{W} = \mathbf{W}_1 \times \mathbf{W}_2$.

Based on the foregoing descriptions of beneficial effects of Embodiment 1, the terminal device sends, to the access network device, the CSI including the first PMI and the second PMI. The second PMI is used to indicate only the some column vectors of $\mathbf{W}_2$ and the amplitude association relationship and the phase association relationship between the some column vectors of $\mathbf{W}_2$ and the remaining column vectors of $\mathbf{W}_2$, and therefore the some column vectors of $\mathbf{W}_2$ correspond to a relatively small quantity of first matrices in the second codebook. The terminal device may use the second PMI with a relatively small quantity of bits, so that the access network device can determine $\mathbf{W}_2$. The second PMI in this embodiment does not need to indicate all column vectors of $\mathbf{W}_2$ to the access network device. Therefore, the second PMI occupies a small quantity of bits, to effectively reduce overheads for feeding back the CSI by the terminal device to the access network device, and avoid an uplink resource waste. In addition, in this optional manner, the access network device determines $\mathbf{W}_2$ more accurately based on content indicated by the second PMI.

Optionally, "the amplitude association relationship between the some column vectors of $\mathbf{W}_2$ and the remaining column vectors of $\mathbf{W}_2$" in Embodiment 1 specifically includes: Amplitudes of the first $\left\lceil \dfrac{N}{2} \right\rceil$ column vectors of $\mathbf{W}_2$ are related to amplitudes of the last $\left(N - \left\lceil \dfrac{N}{2} \right\rceil\right)$ column vectors of $\mathbf{W}_2$, and N is a quantity of columns of $\mathbf{W}_2$.

In this optional manner, that the amplitudes of the first $\left\lceil \dfrac{N}{2} \right\rceil$ column vectors of $\mathbf{W}_2$ are related to the amplitudes of the last $\left(N - \left\lceil \dfrac{N}{2} \right\rceil\right)$ column vectors of $\mathbf{W}_2$ may be that an amplitude of a column vector in the last $\left(N - \left\lceil \dfrac{N}{2} \right\rceil\right)$ column vectors of $\mathbf{W}_2$ is related to an amplitude of any column vector in the first $\left\lceil \dfrac{N}{2} \right\rceil$ column vectors of $\mathbf{W}_2$. Herein, the "amplitude association" may be that an amplitude of a column vector in the last $\left(N - \left\lceil \dfrac{N}{2} \right\rceil\right)$ column vectors of $\mathbf{W}_2$ is the same as an amplitude of a column vector in the first $\left\lceil \dfrac{N}{2} \right\rceil$ column vectors of $\mathbf{W}_2$, or there is a specific association relationship between an amplitude of a column vector in the last $\left(N - \left\lceil \dfrac{N}{2} \right\rceil\right)$ column vectors of $\mathbf{W}_2$ and an

amplitude of a column vector in the first $\left\lceil \dfrac{N}{2} \right\rceil$ column vectors of $\mathbf{W}_2$ in a polarization direction of $\mathbf{W}_2$. In this embodiment, polarization directions of $\mathbf{W}_2$ may include a first polarization direction and a second M polarization direction, the first $\dfrac{M}{2}$ rows of $\mathbf{W}_2$ are the first polarization direction of $\mathbf{W}_2$, the last $\dfrac{M}{2}$ rows of $\mathbf{W}_2$ are the second polarization direction of $\mathbf{W}_2$, and M is a quantity of rows of $\mathbf{W}_2$.

Optionally, "the amplitude association relationship between the some column vectors of $\mathbf{W}_2$ and the remaining column vectors of $\mathbf{W}_2$" in Embodiment 1 specifically includes: Amplitudes of $\left\lceil \dfrac{N}{2} \right\rceil$ column vectors of $\mathbf{W}_2$ are related to amplitudes of remaining $\left( \mathrm{N} - \left\lceil \dfrac{N}{2} \right\rceil \right)$ column vectors of $\mathbf{W}_2$, and N is a quantity of columns of $\mathbf{W}_2$.

In this optional manner, that the amplitudes of the $\left\lceil \dfrac{N}{2} \right\rceil$ column vectors of $\mathbf{W}_2$ are related to the amplitudes of the remaining $\left( \mathrm{N} - \left\lceil \dfrac{N}{2} \right\rceil \right)$ column vectors of $\mathbf{W}_2$ may be that an amplitude of a column vector in the remaining $\left( \mathrm{N} - \left\lceil \dfrac{N}{2} \right\rceil \right)$ column vectors of $\mathbf{W}_2$ is related to an amplitude of a column vector in the $\left\lceil \dfrac{N}{2} \right\rceil$ column vectors of $\mathbf{W}_2$.

Herein, the "amplitude association" may be that an amplitude of a column vector in the remaining $\left( \mathrm{N} - \left\lceil \dfrac{N}{2} \right\rceil \right)$ column vectors of $\mathbf{W}_2$ is the same as an amplitude of a column vector in the $\left\lceil \dfrac{N}{2} \right\rceil$ column vectors of $\mathbf{W}_2$, or there is a specific association relationship between an amplitude of a column vector in the remaining $\left( \mathrm{N} - \left\lceil \dfrac{N}{2} \right\rceil \right)$ column vectors of $\mathbf{W}_2$ and an amplitude of a column vector in the $\left\lceil \dfrac{N}{2} \right\rceil$ column vectors of $\mathbf{W}_2$ in a polarization direction of $\mathbf{W}_2$. In this embodiment, polarization directions of $\mathbf{W}_2$ may include a first polarization direction and a second polarization direction, the first $\dfrac{M}{2}$ rows of $\mathbf{W}_2$ are the first polarization direction of $\mathbf{W}_2$, the last $\dfrac{M}{2}$ rows of $\mathbf{W}_2$ are the second polarization direction of $\mathbf{W}_2$, and M is a quantity of rows of $\mathbf{W}_2$.

Optionally, the phase association relationship between the some column vectors of $\mathbf{W}_2$ and the remaining column vectors of $\mathbf{W}_2$ may be: Phases of the first $\left\lceil \dfrac{N}{2} \right\rceil$ column vectors of $\mathbf{W}_2$ are related to phases of the last

$(N - \left\lceil \dfrac{N}{2} \right\rceil)$ column vectors of $W_2$.

In this optional manner, that phases of the first $\left\lceil \dfrac{N}{2} \right\rceil$ column vectors of $W_2$ are related to phases of the last $(N - \left\lceil \dfrac{N}{2} \right\rceil)$ column vectors of $W_2$ may be that a phase of a column vector in the last $(N - \left\lceil \dfrac{N}{2} \right\rceil)$ column vectors of $W_2$ is related to a phase of any one of the first $\left\lceil \dfrac{N}{2} \right\rceil$ column vectors of $W_2$. Herein, the "phase association" may be that a phase of a column vector in the last $(N - \left\lceil \dfrac{N}{2} \right\rceil)$ column vectors of $W_2$ is the same as a phase of a column vector in the first $\left\lceil \dfrac{N}{2} \right\rceil$ column vectors of $W_2$, or there is a specific angle proportion relationship between a phase of a column vector in the last $(N - \left\lceil \dfrac{N}{2} \right\rceil)$ column vectors of $W_2$ and a phase of a column vector in the first $\left\lceil \dfrac{N}{2} \right\rceil$ column vectors of $W_2$ in a polarization direction of $W_2$. In this embodiment, polarization directions of $W_2$ may include a first polarization direction and a second polarization direction, the first $\dfrac{M}{2}$ rows of $W_2$ are the first polarization direction of $W_2$, the last $\dfrac{M}{2}$ rows of $W_2$ are the second polarization direction of $W_2$, and M is a quantity of rows of $W_2$.

Optionally, the phase association relationship between the some column vectors of $W_2$ and the remaining column vectors of $W_2$ may be: Phases of $\left\lceil \dfrac{N}{2} \right\rceil$ column vectors of $W_2$ are related to phases of remaining $(N - \left\lceil \dfrac{N}{2} \right\rceil)$ column vectors of $W_2$.

In this optional manner, that phases of the $\left\lceil \dfrac{N}{2} \right\rceil$ column vectors of $W_2$ are related to phases of the remaining $(N - \left\lceil \dfrac{N}{2} \right\rceil)$ column vectors of $W_2$ may be that a phase of a column vector in the remaining $(N - \left\lceil \dfrac{N}{2} \right\rceil)$ column vectors of $W_2$ is related to a phase of any one of the $\left\lceil \dfrac{N}{2} \right\rceil$ column vectors of $W_2$. Herein, the "phase association" may be that a phase of a column vector in the remaining $(N - \left\lceil \dfrac{N}{2} \right\rceil)$ column vectors of $W_2$ is the same as a phase of a column vector in the $\left\lceil \dfrac{N}{2} \right\rceil$ column vectors of $\mathbf{W}_2$, or there is a specific angle proportion relationship between a phase of a column vector in the remaining $\left( N - \left\lceil \dfrac{N}{2} \right\rceil \right)$ column vectors of $\mathbf{W}_2$ and a phase of a column vector in the $\left\lceil \dfrac{N}{2} \right\rceil$

column vectors of $\mathbf{W}_2$ in a polarization direction of $\mathbf{W}_2$. In this embodiment, polarization directions of $\mathbf{W}_2$ may include a

first polarization direction and a second polarization direction, the first $\dfrac{M}{2}$ rows of $\mathbf{W}_2$ are the first polarization direction

of $\mathbf{W}_2$, the last $\dfrac{M}{2}$ rows of $\mathbf{W}_2$ are the second polarization direction of $\mathbf{W}_2$, and M is a quantity of rows of $\mathbf{W}_2$.

In a first possible implementation of this embodiment of this application, that the amplitudes of the first $\left\lceil \dfrac{N}{2} \right\rceil$

column vectors of $\mathbf{W}_2$ are related to the amplitudes of the last $\left( N - \left\lceil \dfrac{N}{2} \right\rceil \right)$ column vectors of $\mathbf{W}_2$ may be: Amplitudes

of a $\left(k + \left\lceil \dfrac{N}{2} \right\rceil\right)^{\text{th}}$ column vector of $\mathbf{W}_2$ in the first polarization direction of $\mathbf{W}_2$ are related to amplitudes of a $k^{\text{th}}$ column

vector of $\mathbf{W}_2$ in the second polarization direction of $\mathbf{W}_2$, and amplitudes of the $\left(k + \left\lceil \dfrac{N}{2} \right\rceil\right)^{\text{th}}$ column vector of $\mathbf{W}_2$

in the second polarization direction of $\mathbf{W}_2$ are related to amplitudes of the $k^{\text{th}}$ column vector of $\mathbf{W}_2$ in the first polarization direction of $\mathbf{W}_2$. The polarization directions of $\mathbf{W}_2$ include the first polarization direction and the second polarization direction, k is a positive integer in $\left[1, \left\lceil \dfrac{N}{2} \right\rceil\right]$, the first $\dfrac{M}{2}$ rows of $\mathbf{W}_2$ are the first polarization direction of $\mathbf{W}_2$, the

last $\dfrac{M}{2}$ rows of $\mathbf{W}_2$ are the second polarization direction of $\mathbf{W}_2$, and M is a quantity of rows of $\mathbf{W}_2$.

In the first possible implementation, that the amplitudes of the $\left(k + \left\lceil \dfrac{N}{2} \right\rceil\right)^{\text{th}}$ column vector of $\mathbf{W}_2$ in the first

polarization direction of $\mathbf{W}_2$ are related to the amplitudes of the $k^{\text{th}}$ column vector of $\mathbf{W}_2$ in the second polarization direction

of $\mathbf{W}_2$ may be: The amplitudes of the $\left(k + \left\lceil \dfrac{N}{2} \right\rceil\right)^{\text{th}}$ column vector of $\mathbf{W}_2$ in the first polarization direction of $\mathbf{W}_2$ are

equal to the amplitudes of the $k^{\text{th}}$ column vector of $\mathbf{W}_2$ in the second polarization direction of $\mathbf{W}_2$, and a sequence of the amplitudes of the $\left(k + \left\lceil \dfrac{N}{2} \right\rceil\right)^{\text{th}}$ column vector in the first polarization direction of $\mathbf{W}_2$ is the same as a sequence of the amplitudes of the $k^{\text{th}}$ column vector in the second polarization direction of $\mathbf{W}_2$. That the amplitudes of the

$(k + \left\lceil \dfrac{N}{2} \right\rceil)^{th}$ column vector of $\mathbf{W}_2$ in the second polarization direction of $\mathbf{W}_2$ are related to the amplitudes of the $k^{th}$ column vector of $\mathbf{W}_2$ in the first polarization direction of $\mathbf{W}_2$ may be: The amplitudes of the $(k + \left\lceil \dfrac{N}{2} \right\rceil)^{th}$ column vector of $\mathbf{W}_2$ in the second polarization direction of $\mathbf{W}_2$ are equal to the amplitudes of the $k^{th}$ column vector of $\mathbf{W}_2$ in the first polarization direction of $\mathbf{W}^2$, and a sequence of the amplitudes of the $(k + \left\lceil \dfrac{N}{2} \right\rceil)^{th}$ column vector in the second polarization direction of $\mathbf{W}_2$ is the same as a sequence of the amplitudes of the $k^{th}$ column vector in the first polarization direction of $\mathbf{W}_2$.

In a second possible implementation of this embodiment of this application, that the phases of the first $\left\lceil \dfrac{N}{2} \right\rceil$ column vectors of $\mathbf{W}_2$ are related to the phases of the last $(N - \left\lceil \dfrac{N}{2} \right\rceil)$ column vectors of $\mathbf{W}^2$ may be: Phases of a $(k + \left\lceil \dfrac{N}{2} \right\rceil)^{th}$ column vector of $\mathbf{W}_2$ in the first polarization direction of $\mathbf{W}_2$ are related to phases of a $k^{th}$ column vector of $\mathbf{W}_2$ in the first polarization direction of $\mathbf{W}_2$, and phases of the $(k + \left\lceil \dfrac{N}{2} \right\rceil)^{th}$ column vector of $\mathbf{W}_2$ in the second polarization direction of $\mathbf{W}_2$ are related to phases of the $k^{th}$ column vector of $\mathbf{W}_2$ in the second polarization direction of $\mathbf{W}_2$. The polarization directions of $\mathbf{W}_2$ include the first polarization direction and the second polarization direction, k is a positive integer in $[1, \left\lceil \dfrac{N}{2} \right\rceil]$, the first $\dfrac{M}{2}$ rows M of $\mathbf{W}_2$ are the first polarization direction of $\mathbf{W}_2$, the last $\dfrac{M}{2}$ rows of $\mathbf{W}_2$ are the second polarization direction of $\mathbf{W}_2$, and M is a quantity of rows of $\mathbf{W}_2$.

In the second possible implementation, that the phases of the $(k + \left\lceil \dfrac{N}{2} \right\rceil)^{th}$ column vector of $\mathbf{W}_2$ in the first polarization direction of $\mathbf{W}_2$ are related to the phases of the $k^{th}$ column vector of $\mathbf{W}_2$ in the first polarization direction of $\mathbf{W}_2$ may be: A phase of an element in a $y^{th}$ row in the first polarization direction of the $k^{th}$ column vector of $\mathbf{W}_2$ is rotated by an angle of $a_y$, to obtain a phase of an element in a $y^{th}$ row in the first polarization direction of the $(k + \left\lceil \dfrac{N}{2} \right\rceil)^{th}$ column vector of $\mathbf{W}_2$. That the phases of the $(k + \left\lceil \dfrac{N}{2} \right\rceil)^{th}$ column vector of $\mathbf{W}_2$ in the second polarization direction of $\mathbf{W}_2$ are related to the phases of the $k^{th}$ column vector of $\mathbf{W}_2$ in the second polarization direction of $\mathbf{W}_2$ may be: A phase of an element in a $y^{th}$ row in the second polarization direction of the $k^{th}$ column vector of $\mathbf{W}_2$ is rotated by an angle of

$b_y$, to obtain a phase of an element in a $y^{th}$ row in the second polarization direction of the $(k + \left\lceil \dfrac{N}{2} \right\rceil)^{th}$ column vector of $\mathbf{W}_2$, where $a_y$ and $b_y$ meet $|a_y - b_y| \bmod(2\pi) = \pi$, $(x)\bmod(2\pi)$ indicates that a remainder is obtained by dividing $x$ by $2\pi$, a value range of $a_y$ or $b_y$ is $[0, 2\pi)$, and

$$y = 1, ..., \frac{M}{2}.$$

It should be noted that $a_y$ is a phase rotation angle corresponding to the element in the $y^{th}$ row in the first polarization direction of the $k^{th}$ column vector, and $b_y$ is a phase rotation angle of the element in the $y^{th}$ row in the second polarization direction of the $k^{th}$ column vector. Optionally, $a_y$ may be equal to $0°$, and when $a_y$ is equal to 0, $b_y = 180°$. To be specific, a phase of an element in each row in the first polarization direction of the $k^{th}$ column vector of $\mathbf{W}_2$ is rotated by $0°$ (actually, no rotation is performed), to obtain the phase of the element in the $y^{th}$ row in the first polarization direction of the $(k + \left\lceil \dfrac{N}{2} \right\rceil)^{th}$ column vector of $\mathbf{W}_2$, that is, the phase of the element in the $y^{th}$ row in the first polarization direction of the $k^{th}$ column vector of $\mathbf{W}_2$ is directly used as the phase of the element in the $y^{th}$ row in the first polarization direction of the $(k + \left\lceil \dfrac{N}{2} \right\rceil)^{th}$ column vector of $\mathbf{W}_2$. In this case, a phase of an element in each row in the second polarization direction of the $k^{th}$ column vector of $\mathbf{W}_2$ is rotated by $180°$, to obtain the phase of the element in the $y^{th}$ row in the second polarization direction of the $(k + \left\lceil \dfrac{N}{2} \right\rceil)^{th}$ column vector of $\mathbf{W}_2$. In this case, a quantity of rotated phases is equal to a half of a quantity of elements in a $k^{th}$ column.

Optionally, there may be a plurality of elements in the first polarization direction of the $k^{th}$ column vector, and $a_y$ by which phases of elements in rows in the first polarization direction of the $k^{th}$ column vector are rotated may be the same or different.

Optionally, when $a_y$ is not equal to 0, a quantity of rotated phases may be equal to a quantity of elements in a $k^{th}$ column. To be specific, both the phase of the element in the $y^{th}$ row in the first polarization direction of the $k^{th}$ column vector of $\mathbf{W}_2$ and the phase of the element in the $y^{th}$ row in the second polarization direction of the $k^{th}$ column vector of $\mathbf{W}_2$ need to be rotated, to obtain the phase of the element in the $y^{th}$ row in the first polarization direction of the $(k + \left\lceil \dfrac{N}{2} \right\rceil)^{th}$ column vector of $\mathbf{W}_2$ and the phase of the element in the $y^{th}$ row in the second polarization direction of the $(k + \left\lceil \dfrac{N}{2} \right\rceil)^{th}$ column vector of $\mathbf{W}_2$.

In a third possible implementation of this embodiment of this application, that the phases of the first $\left\lceil \dfrac{N}{2} \right\rceil$ column vectors of $\mathbf{W}_2$ are related to the phases of the last $(N - \left\lceil \dfrac{N}{2} \right\rceil)$ column vectors of $\mathbf{W}_2$ may be: Phases of a $(k + \left\lceil \dfrac{N}{2} \right\rceil)^{th}$ column vector of $\mathbf{W}_2$ in the first polarization direction of $\mathbf{W}_2$ are related to phases of a $k^{th}$ column vector

of $\mathbf{W}_2$ in the second polarization direction of $\mathbf{W}_2$, and phases of the $(k + \lceil \frac{N}{2} \rceil)^{th}$ column vector of $\mathbf{W}_2$ in the second polarization direction of $\mathbf{W}_2$ are related to phases of the $k^{th}$ column vector of $\mathbf{W}_2$ in the first polarization direction of $\mathbf{W}_2$. The polarization directions of $\mathbf{W}_2$ include the first polarization direction and the second polarization direction, k is a positive integer in $[1, \lceil \frac{N}{2} \rceil]$, the first $\frac{M}{2}$ rows of $\mathbf{W}_2$ are the first polarization direction of $\mathbf{W}_2$, the last $\frac{M}{2}$ rows of $\mathbf{W}_2$ are the second polarization direction of $\mathbf{W}_2$, and M is a quantity of rows of $\mathbf{W}_2$.

In the third possible implementation, that the phases of the $(k + \lceil \frac{N}{2} \rceil)^{th}$ column vector of $\mathbf{W}_2$ in the first polarization direction of $\mathbf{W}_2$ are related to the phases of the $k^{th}$ column vector of $\mathbf{W}_2$ in the second polarization direction of $\mathbf{W}_2$ may be: A phase of an element in a $y^{th}$ row in the first polarization direction of the $k^{th}$ column vector of $\mathbf{W}_2$ is conjugated and rotated by an angle of $a_y$, to obtain a phase of an element in a $y^{th}$ row in the second polarization direction of the $(k + \lceil \frac{N}{2} \rceil)^{th}$ column vector of $\mathbf{W}_2$. That the phases of the $(k + \lceil \frac{N}{2} \rceil)^{th}$ column vector of $\mathbf{W}_2$ in the second polarization direction of $\mathbf{W}_2$ are related to the phases of the $k^{th}$ column vector of $\mathbf{W}_2$ in the first polarization direction of $\mathbf{W}_2$ may be: A phase of an element in a $y^{th}$ row in the second polarization direction of the $k^{th}$ column vector of $\mathbf{W}_2$ is conjugated and rotated by an angle of $b_y$, to obtain a phase of an element in a $y^{th}$ row in the first polarization direction of the $(k + \lceil \frac{N}{2} \rceil)^{th}$ column vector of $\mathbf{W}_2$, where $a_y$ and $b_y$ meet l$a_y$ - $b_y$| mod(2$\pi$) = $\pi$, (x) mod(2$\pi$) indicates that a remainder is obtained by dividing x by 2$\pi$, a value range of $a_y$ or $b_y$ is [0, 2$\pi$), and $y = 1, ..., \frac{M}{2}$.

It should be noted that $a_y$ is a phase rotation angle corresponding to the element in the $y^{th}$ row in the first polarization direction of the $k^{th}$ column vector, and $b_y$ is a phase rotation angle of the element in the $y^{th}$ row in the second polarization direction of the $k^{th}$ column vector. Optionally, $a_y$ may be equal to 0, and when $a_y$ is equal to 0, $b_y$ = 180°. To be specific, a phase of an element in each row in the first polarization direction of the $k^{th}$ column vector of $\mathbf{W}_2$ is conjugated and rotated by 0° (actually, no rotation is performed), to obtain the phase of the element in the $y^{th}$ row in the second polarization direction of the $(k + \lceil \frac{N}{2} \rceil)^{th}$ column vector of $\mathbf{W}^2$. In this case, a phase of an element in each row in the second polarization direction of the $k^{th}$ column vector of $\mathbf{W}_2$ is conjugated and rotated by 180°, to obtain the phase of the element in the $y^{th}$ row in the first polarization direction of the $(k + \lceil \frac{N}{2} \rceil)^{th}$ column vector of $\mathbf{W}_2$. In this case, a quantity of rotated phases is equal to a half of a quantity of elements in a $k^{th}$ column.

Optionally, there may be a plurality of elements in the first polarization direction of the $k^{th}$ column vector, and $a_y$ by which phases of elements in rows in the first polarization direction of the $k^{th}$ column vector are rotated may be the same or different.

Optionally, when $a_y$ is not equal to 0, a quantity of rotated phases may be equal to a quantity of elements in a $k^{th}$ column. To be specific, both the phase of the element in the $y^{th}$ row in the first polarization direction of the $k^{th}$ column vector of $\mathbf{W}_2$ and the phase of the element in the $y^{th}$ row in the second polarization direction of the $k^{th}$ column vector of

$\mathbf{W_2}$ need to be rotated, to obtain the phase of the element in the $y^{th}$ row in the second polarization direction of the

$(\mathrm{k} + \left\lceil \dfrac{N}{2} \right\rceil )^{th}$ column vector of $\mathbf{W_2}$ and the phase of the element in the $y^{th}$ row in the first polarization direction of the

$(\mathrm{k} + \left\lceil \dfrac{N}{2} \right\rceil )^{th}$ column vector of $\mathbf{W_2}$.

It should be noted that a structure of $\mathbf{W_2}$ in this embodiment of this application may be obtained by combining the first possible implementation and the second possible implementation, or may be obtained by combining the first possible implementation and the third possible implementation.

To describe the technical solutions in the embodiments of this application more clearly, the following uses a simple example to describe the foregoing three possible implementations. Assuming $\mathbf{W_2}$ includes four rows and three columns, that is, N = 3 and M = 4, the first two rows of $\mathbf{W_2}$ are set to the first polarization direction of $\mathbf{W_2}$, the last two rows of $\mathbf{W_2}$ are set to the second polarization direction, k = 1, and $\mathrm{k} + \left\lceil \dfrac{N}{2} \right\rceil = 3$.

(1) Assuming the structure of $\mathbf{W_2}$ is obtained by combining the first possible implementation and the second possible implementation, the structure of $\mathbf{W_2}$ may be

$$\mathbf{W_2} = \begin{bmatrix} p^{(WB)}_{0,0,0}p^{(SB)}_{0,0,0}c_{0,0,0} & p^{(WB)}_{0,1,0}p^{(SB)}_{0,1,0}c_{0,1,0} & p^{(WB)}_{1,0,0}p^{(SB)}_{1,0,0}c_{0,0,0} \\ p^{(WB)}_{0,0,1}p^{(SB)}_{0,0,1}c_{0,0,1} & p^{(WB)}_{0,1,1}p^{(SB)}_{0,1,1}c_{0,1,1} & p^{(WB)}_{1,0,1}p^{(SB)}_{0,0,1}c_{0,0,1} \\ p^{(WB)}_{1,0,0}p^{(SB)}_{1,0,0}c_{1,0,0} & p^{(WB)}_{1,1,0}p^{(SB)}_{1,1,0}c_{1,1,0} & -p^{(WB)}_{0,0,0}p^{(SB)}_{0,0,0}c_{1,0,0} \\ p^{(WB)}_{1,0,1}p^{(SB)}_{1,0,1}c_{1,0,1} & p^{(WB)}_{1,1,1}p^{(SB)}_{1,1,1}c_{1,1,1} & -p^{(WB)}_{0,0,1}p^{(SB)}_{0,0,1}c_{1,0,1} \end{bmatrix} \text{ (a structure 1)},$$

or may be

$$\mathbf{W_2} = \begin{bmatrix} p^{(WB)}_{0,0,0}p^{(SB)}_{0,0,0}c_{0,0,0} & p^{(WB)}_{0,1,0}p^{(SB)}_{0,1,0}c_{0,1,0} & p^{(WB)}_{1,0,0}p^{(SB)}_{1,0,0}c_{0,0,0} \\ p^{(WB)}_{0,0,1}p^{(SB)}_{0,0,1}c_{0,0,1} & p^{(WB)}_{0,1,1}p^{(SB)}_{0,1,1}c_{0,1,1} & -p^{(WB)}_{1,0,1}p^{(SB)}_{0,0,1}c_{0,0,1} \\ p^{(WB)}_{1,0,0}p^{(SB)}_{1,0,0}c_{1,0,0} & p^{(WB)}_{1,1,0}p^{(SB)}_{1,1,0}c_{1,1,0} & -p^{(WB)}_{0,0,0}p^{(SB)}_{0,0,0}c_{1,0,0} \\ p^{(WB)}_{1,0,1}p^{(SB)}_{1,0,1}c_{1,0,1} & p^{(WB)}_{1,1,1}p^{(SB)}_{1,1,1}c_{1,1,1} & p^{(WB)}_{0,0,1}p^{(SB)}_{0,0,1}c_{1,0,1} \end{bmatrix} \text{ (a structure 2)}.$$

(WB) $p^{(WB)}_{r,l,i}$ is first amplitude information of an $i^{th}$ column vector (or beam) of $\tilde{w}$ in $\mathbf{W_1}$ reported by the terminal device by using a wideband, in an $r^{th}$ polarization direction of $\mathbf{W}$ or $\mathbf{W_2}$, and in an $l$ th column of $\mathbf{W}$ or $\mathbf{W_2}$. $p^{(SB)}_{r,l,i}$ is second amplitude information of an $i^{th}$ beam of $\tilde{w}$ in $\mathbf{W_1}$ reported by the terminal device by using a subband, in an $r^{th}$ polarization direction, and in an $l^{th}$ column of $\mathbf{W}$ or $\mathbf{W_2}$. $c_{r,l,i}$ is phase information of an $i^{th}$ beam of $\tilde{w}$ in $\mathbf{W_1}$, in an $r^{th}$ polarization direction, and in an $l^{th}$ column of $\mathbf{W}$ or $\mathbf{W_2}$, where r is a polarization direction of $\mathbf{W_2}$, $l$ is a quantity of columns of $\mathbf{W_2}$, and

$$\mathbf{W_1} = \begin{bmatrix} \mathbf{b_1} & \mathbf{b_2} & \mathbf{b_3} & \mathbf{b_4} & 0 & 0 & 0 & 0 \\ 0 & 0 & 0 & 0 & \mathbf{b_1} & \mathbf{b_2} & \mathbf{b_3} & \mathbf{b_4} \end{bmatrix}$$

$i$ is a quantity of columns of $\tilde{w}$ in $\mathbf{W_1}$. A structure of $\mathbf{W_1}$ is , and $b_i$ a DFT vector.

Referring to $\mathbf{W_2}$ in the structure 1, from an amplitude perspective, amplitudes of elements in the third column of $\mathbf{W_2}$ in the first polarization direction (namely, the first two rows in the third column) of $\mathbf{W_2}$ are equal to amplitudes of elements in the first column of $\mathbf{W_2}$ in the second polarization direction (namely, the last two rows in the first column) of

$\mathbf{W}_2$. That is, the amplitudes ($p^{(WB)}_{1,0,0}p^{(SB)}_{1,0,0}$ and $p^{(WB)}_{1,0,1}p^{(SB)}_{0,0,1}$) of the elements in the first two rows in the third column are the same as the amplitudes of the elements in the last two rows in the first column. In addition, a sequence of the amplitudes of the third column vector in the first polarization direction of $\mathbf{W}_2$ is that $p^{(WB)}_{1,0,0}p^{(SB)}_{1,0,0}$ is located in a previous row of $p^{(WB)}_{1,0,1}p^{(SB)}_{0,0,1}$, and a sequence of the amplitudes of the first column vector in the second polarization direction of $\mathbf{W}_2$ is also that $p^{(WB)}_{1,0,0}p^{(SB)}_{1,0,0}$ is located in a previous row of $p^{(WB)}_{1,0,1}p^{(SB)}_{0,0,1}$. That is, in $\mathbf{W}_2$ in the structure 1, the sequence of the amplitudes of the third column vector in the first polarization direction of $\mathbf{W}_2$ is the same as the sequence of the amplitudes of the first column vector in the second polarization direction of $\mathbf{W}_2$. Moreover, amplitudes of elements in the third column of $\mathbf{W}_2$ in the second polarization direction (namely, the last two rows in the third column) of $\mathbf{W}_2$ are equal to amplitudes of elements in the first column of $\mathbf{W}_2$ in the first polarization direction (namely, the first two rows in the first column) of $\mathbf{W}_2$. That is, the amplitudes ($p^{(WB)}_{0,0,0}p^{(SB)}_{0,0,0}$ and $p^{(WB)}_{0,0,1}p^{(SB)}_{0,0,1}$) of the elements in the last two rows in the third column are the same as the amplitudes of the elements in the first two rows in the first column. In addition, a sequence of the amplitudes of the third column vector in the second polarization direction of $\mathbf{W}_2$ is that $p^{(WB)}_{0,0,0}p^{(SB)}_{0,0,0}$ is located in a previous row of $p^{(WB)}_{0,0,1}p^{(SB)}_{0,0,1}$, and a sequence of the amplitudes of the first column vector in the first polarization direction of $\mathbf{W}_2$ is also that $p^{(WB)}_{0,0,0}p^{(SB)}_{0,0,0}$ is located in a previous row of $p^{(WB)}_{0,0,1}p^{(SB)}_{0,0,1}$. That is, in $\mathbf{W}_2$ in the structure 1, the sequence of the amplitudes of the third column vector in the second polarization direction of $\mathbf{W}_2$ is the same as the sequence of the amplitudes of the first column vector in the first polarization direction of $\mathbf{W}_2$ .

Then, from a phase perspective, in $\mathbf{W}_2$ in the structure 1, in two phases in the third column in the first polarization direction (that is, $c_{0,0,0}$ in the third column and the first row and $c_{0,0,1}$ in the third column and the second row, where $c_{0,0,0}$ in the third column and the first row is referred to as a phase of an element in the first row of the first polarization direction of the third column, and $c_{0,0,1}$ in the third column and the second row is referred to as a phase of an element in the second row of the first polarization direction of the third column), $c_{0,0,0}$ in the third column and the first row is equal to a phase $c_{0,0,0}$ of an element in the first column and the first row, to be specific, the phase $c_{0,0,0}$ of the element in the first row of the first polarization direction of the first column is rotated by 0°, to obtain the phase of the element in the first row of the first polarization direction of the third column; and $c_{0,0,1}$ in the third column and the second row is equal to a phase $c_{0,0,1}$ of an element in the first column and the second row, to be specific, the phase $c_{0,0,1}$ of the element in the second row of the first polarization direction of the first column is rotated by 0°, to obtain the phase of the element in the second row of the first polarization direction of the third column. In this case, $a_y$ corresponding to elements in rows of the first polarization direction of the first column is equal to 0.

Likewise, still referring to $\mathbf{W}_2$ in the structure 1, in two phases in the third column in the second polarization direction (that is, $-c_{1,0,0}$ in the third column and the third row and $-c_{1,0,1}$ in the third column and the fourth row, where $-c_{1,0,0}$ in the third column and the third row is referred to as a phase of an element in the first row of the second polarization direction of the third column, and $-c_{1,0,1}$ in the third column and the fourth row is referred to as a phase of an element in the second row of the second polarization direction of the third column), $-c_{1,0,0}$ in the third column and the third row is equal to a value obtained after a phase $c_{1,0,0}$ of an element in the first column and the third row is rotated by 180°, to be specific, the phase $c_{1,0,0}$ of the element in the first row of the second polarization direction of the first column is rotated by 180°, to obtain the phase of the element in the first row of the second polarization direction of the third column; and $-c_{1,0,1}$ in the third column and the fourth row is equal to a value obtained after a phase $c_{1,0,1}$ of an element in the first column and the fourth row is rotated by 180°, to be specific, the phase $c_{1,0,1}$ of the element in the second row of the second polarization direction of the first column is rotated by 180°, to obtain the phase of the element in the second row of the second polarization direction of the third column. In this case, $b_y$ corresponding to elements in rows of the second polarization direction of the first column is equal to 180°.

Referring to $\mathbf{W}_2$ in the structure 2, from a perspective of an amplitude of a column vector, $\mathbf{W}_2$ in the structure 2 is similar to $\mathbf{W}_2$ in the structure 1, and details are not described herein again. From a perspective a phase of a column vector, in $\mathbf{W}_2$ in the structure 2, in two phases in the third column in the first polarization direction (that is, $c_{0,0,0}$ in the third column and the first row and $-c_{0,0,1}$ in the third column and the second row, where $c_{0,0,0}$ in the third column and the first row is referred to as a phase of an element in the first row of the first polarization direction of the third column, and $c_{0,0,1}$ in the third column and the second row is referred to as a phase of an element in the second row of the first polarization direction of the third column), $c_{0,0,0}$ in the third column and the first row is equal to a phase $c_{0,0,0}$ of an element in the first column and the first row, to be specific, the phase $c_{0,0,0}$ of the element in the first row of the first polarization direction of the first column is rotated by 0°, to obtain the phase of the element in the first row of the first polarization direction of the third column; and $-c_{0,0,1}$ in the third column and the second row is equal to a value obtained after a phase $c_{0,0,1}$ of an element in the first column and the second row is rotated by 180°, to be specific, the phase $c_{0,0,1}$ of the element in the second row of the first polarization direction of the first column is rotated by 180°, to obtain the phase of the element in the second row of the first polarization direction of the third column. In this case, $a_1$ corresponding to the element in the first row of the first polarization direction of the first column is equal to 0, and $a_2$ corresponding to the element in the second row of the first polarization direction of the first column is equal to 180°.

Likewise, still referring to $\mathbf{W}_2$ in the structure 2, in two phases in the third column in the second polarization direction (that is, $-c_{1,0,0}$ in the third column and the third row and $c_{1,0,1}$ in the third column and the fourth row, where $-c_{1,0,0}$ in the third column and the third row is referred to as a phase of an element in the first row of the second polarization direction of the third column, and $c_{1,0,1}$ in the third column and the fourth row is referred to as a phase of an element in the second row of the second polarization direction of the third column), $-c_{1,0,0}$ in the third column and the third row is equal to a value obtained after a phase $c_{1,0,0}$ of an element in the first column and the third row is rotated by 180°, to be specific, the phase $c_{1,0,0}$ of the element in the first row of the second polarization direction of the first column is rotated by 180°, to obtain the phase of the element in the first row of the second polarization direction of the third column; and $-c_{1,0,1}$ in the third column and the fourth row is equal to a value obtained after a phase $c_{1,0,1}$ of an element in the first column and the fourth row is rotated by 180°, to be specific, the phase $c_{1,0,1}$ of the element in the second row of the second polarization direction of the first column is rotated by 180°, to obtain the phase of the element in the second row of the second polarization direction of the third column. In this case, $b_1$ corresponding to the element in the first row of the second polarization direction of the first column is equal to 180°, and $b_2$ corresponding to the element in the second row of the second polarization direction of the first column is equal to 180°.

It should be noted that the amplitude $p^{(WB)}_{r,l,i}$ reported by using the wideband and the amplitude $p^{(SB)}_{r,l,i}$ reported by using the subband may coexist, or only one of the amplitudes may exist.

(2) Assuming the structure of $\mathbf{W}_2$ is obtained by combining the first possible implementation and the third possible implementation, the structure of $\mathbf{W}_2$ may be

$$\mathbf{W}_2 = \begin{bmatrix} p^{(WB)}_{0,0,0}p^{(SB)}_{0,0,0}c_{0,0,0} & p^{(WB)}_{0,1,0}p^{(SB)}_{0,1,0}c_{0,1,0} & p^{(WB)}_{1,0,0}p^{(SB)}_{1,0,0}c_{1,0,0}^* \\ p^{(WB)}_{0,0,1}p^{(SB)}_{0,0,1}c_{0,0,1} & p^{(WB)}_{0,1,1}p^{(SB)}_{0,1,1}c_{0,1,1} & p^{(WB)}_{1,0,1}p^{(SB)}_{0,0,1}c_{1,0,1}^* \\ p^{(WB)}_{1,0,0}p^{(SB)}_{1,0,0}c_{1,0,0} & p^{(WB)}_{1,1,0}p^{(SB)}_{1,1,0}c_{1,1,0} & -p^{(WB)}_{0,0,0}p^{(SB)}_{0,0,0}c_{0,0,0}^* \\ p^{(WB)}_{1,0,1}p^{(SB)}_{1,0,1}c_{1,0,1} & p^{(WB)}_{1,1,1}p^{(SB)}_{1,1,1}c_{1,1,1} & -p^{(WB)}_{0,0,1}p^{(SB)}_{0,0,1}c_{0,0,1}^* \end{bmatrix} \quad \text{(a structure 3)},$$

or may be

$$\mathbf{W}_2 = \begin{bmatrix} p^{(WB)}_{0,0,0}p^{(SB)}_{0,0,0}c_{0,0,0} & p^{(WB)}_{0,1,0}p^{(SB)}_{0,1,0}c_{0,1,0} & p^{(WB)}_{1,0,0}p^{(SB)}_{1,0,0}c_{1,0,0}^* \\ p^{(WB)}_{0,0,1}p^{(SB)}_{0,0,1}c_{0,0,1} & p^{(WB)}_{0,1,1}p^{(SB)}_{0,1,1}c_{0,1,1} & -p^{(WB)}_{1,0,1}p^{(SB)}_{0,0,1}c_{1,0,1}^* \\ p^{(WB)}_{1,0,0}p^{(SB)}_{1,0,0}c_{1,0,0} & p^{(WB)}_{1,1,0}p^{(SB)}_{1,1,0}c_{1,1,0} & -p^{(WB)}_{0,0,0}p^{(SB)}_{0,0,0}c_{0,0,0}^* \\ p^{(WB)}_{1,0,1}p^{(SB)}_{1,0,1}c_{1,0,1} & p^{(WB)}_{1,1,1}p^{(SB)}_{1,1,1}c_{1,1,1} & p^{(WB)}_{0,0,1}p^{(SB)}_{0,0,1}c_{0,0,1}^* \end{bmatrix} \quad \text{(a}$$

structure 4).

Referring to $\mathbf{W}_2$ in the structure 3, from an amplitude perspective, amplitudes of elements in the third column of $\mathbf{W}_2$ in the first polarization direction (namely, the first two rows in the third column) of $\mathbf{W}_2$ are equal to amplitudes of elements in the first column of $\mathbf{W}_2$ in the second polarization direction (namely, the last two rows in the first column) of $\mathbf{W}_2$. That is, the amplitudes ($p^{(WB)}_{1,0,0}p^{(SB)}_{1,0,0}$ and $p^{(WB)}_{1,0,1}p^{(SB)}_{0,0,1}$) of the elements in the first two rows in the third column are the same as the amplitudes of the elements in the last two rows in the first column. In addition, a sequence of the amplitudes of the third column vector in the first polarization direction of $\mathbf{W}_2$ is that $p^{(WB)}_{1,0,0}p^{(SB)}_{1,0,0}$ is located in a previous row of $p^{(WB)}_{1,0,1}p^{(SB)}_{0,0,1}$, and a sequence of the amplitudes of the first column vector in the second polarization direction of $\mathbf{W}_2$ is also that $p^{(WB)}_{1,0,0}p^{(SB)}_{1,0,0}$ is located in a previous row of $p^{(WB)}_{1,0,1}p^{(SB)}_{0,0,1}$. That is, in $\mathbf{W}_2$ in the structure 1, the sequence of the amplitudes of the third column vector in the first polarization direction of $\mathbf{W}_2$ is the same as the sequence of the amplitudes of the first column vector in the second polarization direction of $\mathbf{W}_2$. Moreover, amplitudes of elements in the third column of $\mathbf{W}_2$ in the second polarization direction (namely, the last two rows in the third column) of $\mathbf{W}_2$ are equal to amplitudes of elements in the first column of $\mathbf{W}_2$ in the first polarization direction (namely, the first two rows in the first column) of $\mathbf{W}_2$. That is, the amplitudes ($p^{(WB)}_{0,0,0}p^{(SB)}_{0,0,0}$ and $p^{(WB)}_{0,0,1}p^{(SB)}_{0,0,1}$) of the elements in the last two rows in the third column are the same as the amplitudes of the elements in the first two rows in the first column. In addition, a sequence of the amplitudes of the third column vector in the second polarization direction of $\mathbf{W}_2$ is that $p^{(WB)}_{0,0,0}p^{(SB)}_{0,0,0}$ is located in a previous row of $p^{(WB)}_{0,0,1}p^{(SB)}_{0,0,1}$, and a sequence of the amplitudes of the first column vector in the first polarization direction of $\mathbf{W}_2$ is also that $p^{(WB)}_{0,0,0}p^{(SB)}_{0,0,0}$ is located in a previous row of $p^{(WB)}_{0,0,1}p^{(SB)}_{0,0,1}$. That is, in $\mathbf{W}_2$ in the structure 1, the sequence of the amplitudes of the third column vector in the second polarization direction of $\mathbf{W}_2$ is the same as the sequence of the amplitudes of the first column vector in the first polarization direction of $\mathbf{W}_2$.

Then, from a phase perspective, in $\mathbf{W}_2$ in the structure 3, in two phases in the third column in the first polarization direction (that is, $c_{1,0,0}^*$ in the third column and the first row and $c_{1,0,1}^*$ in the third column and the second row, where $c_{1,0,0}$ in the third column and the first row is referred to as a phase of an element in the first row of the first polarization direction of the third column, and $c_{1,0,1}^*$ in the third column and the second row is referred to as a phase of an element in the second row of the first polarization direction of the third column), $c_{1,0,0}^*$ in the third column and the first row is equal to a value obtained after a phase $c_{1,0,0}$ of an element in the first column and the third row is conjugated and rotated by 0°, to be specific, the value obtained after the phase $c_{1,0,0}$ of the element in the first row of the second polarization direction of the first column is conjugated and rotated by 0° is used as the phase of the element in the first row of the first polarization direction of the third column; and $c_{1,0,1}^*$ in the third column and the second row is equal to a value obtained after a phase $c_{1,0,1}$ of an element in the first column and the fourth row is conjugated and rotated by 0°, to be specific, the value obtained after the phase $c_{1,0,1}$ of the element in the second row of the second polarization direction of the first column is conjugated and rotated by 0° is used as the phase of the element in the second row of the first polarization direction of the third column. In this case, $a_1$ corresponding to the element in the first row of the first polarization direction of the first column is equal to 0°, and $a_2$ corresponding to the element in the second row of the first polarization direction of the first column is equal to 0°.

Likewise, still referring to $\mathbf{W}_2$ in the structure 3, in two phases in the third column in the second polarization direction (that is, $-c_{0,0,0}^*$ in the third column and the third row and $-c_{0,0,1}^*$ in the third column and the fourth row, where $-c_{0,0,0}^*$ in the third column and the third row is referred to as a phase of an element in the first row of the second polarization direction of the third column, and $-c_{0,0,1}^*$ in the third column and the fourth row is referred to as a phase of an element in the second row of the second polarization direction of the third column), $-c_{0,0,0}^*$ in the third column and the third row is equal to a value obtained after a phase $c_{0,0,0}$ of an element in the first column and the first row is conjugated and rotated by 180°, to be specific, the value obtained after the phase $c_{0,0,0}$ of the element in the first row of the first polarization direction of the first column is conjugated and rotated by 180° is used as the phase of the element in the first row of the second polarization direction of the third column; and $-c_{0,0,1}^*$ in the third column and the fourth row is equal to a value obtained after a phase $c_{0,0,1}$ of an element in the first column and the second row is conjugated and rotated by 180°, to be specific, the value obtained after the phase $c_{0,0,1}$ $c_{0,0,1}$ of the element in the second row of the first polarization direction of the first column is conjugated and rotated by 180° is used as the phase of the element in the second row of the second polarization direction of the third column. In this case, $b_1$ corresponding to the element in the first row of the first polarization direction of the first column is equal to 180°, and $b_2$ corresponding to the element in the second row of the first polarization direction of the first column is equal to 180°.

Referring to $\mathbf{W}_2$ in the structure 4, from a perspective of an amplitude of a column vector, $\mathbf{W}_2$ in the structure 4 is similar to $\mathbf{W}_2$ in the structure 3, and details are not described herein again. From a perspective of a phase of a column vector, for a specific correspondence of $\mathbf{W}_2$ in the structure 4, refer to the descriptions of $\mathbf{W}_2$ in the structure 3. Details are not described herein again.

In the foregoing descriptions, in $\mathbf{W}_2$ in this embodiment of this application, there is a corresponding amplitude association relationship and a corresponding phase association relationship between the $(k + \lceil \frac{N}{2} \rceil)^{th}$ column vector and the $k^{th}$ column vector. Based on the two association relationships, it may be actually understood that in $\mathbf{W}_2$ in this embodiment of this application, the $(k + \lceil \frac{N}{2} \rceil)^{th}$ column vector is orthogonal to the $k^{th}$ column vector, and the two column vectors may meet the following orthogonal relation formula:

$$\sum_{r=0}^{P-1}\sum_{i=0}^{L-1} p^{WB}_{r,l,i} p^{SB}_{r,l,i} c_{r,l,i} p^{WB}_{r,k,i} p^{SB}_{r,k,i} c^*_{r,k,i} = 0 \quad \text{or} \quad \sum_{r=0}^{P-1}\sum_{i=0}^{L-1} p_{r,l,i} c_{r,l,i} p_{r,k,i} c^*_{r,k,i} = 0$$

. For explanations of p and c, refer to the foregoing embodiment.

Therefore, with reference to the descriptions of the foregoing possible implementations, the terminal device indicates, to the access network device, the $k^{th}$ column vector of $\mathbf{W}_2$ and the amplitude association relationship and the phase association relationship between the $k^{th}$ column vector of $\mathbf{W}_2$ $\mathbf{W}_2$ and the $(k + \lceil \frac{N}{2} \rceil)^{th}$ column vector by using the second PMI, and the access network device may find the $k^{th}$ column vector of $\mathbf{W}_2$ from the second codebook in the preset codebook based on the second PMI, and then construct the $(k + \left\lceil \dfrac{N}{2} \right\rceil)^{th}$ column vector with reference to the $k^{th}$ column vector, so as to construct $\mathbf{W}_2$ in a structure similar to the structure 1 to the structure 4. Therefore, in this embodiment of this application, the access network device can determine $\mathbf{W}_2$ by using the second PMI with a relatively small quantity of bits, so that CSI feedback overheads of the terminal device are greatly reduced, and uplink resource utilization is improved.

In addition, it should be further noted that, in the foregoing association manner, when the access network device obtains the some column vectors of $\mathbf{W}_2$ based on the received second PMI, for example, assuming $\mathbf{W}_2$ includes three columns, the access network device determines the first column vector and the second column vector of $\mathbf{W}_2$, and may obtain, by using the column vectors, an association between amplitudes of the column vectors, and an association between phases of the column vectors, a plurality of column vectors that have an amplitude association relationship and a phase association relationship with the first column. These column vectors are linearly related column vectors, and any one of these linearly related column vectors may be used as the third column of $\mathbf{W}_2$ .

This embodiment of this application further provides a technical solution, to resolve a technical problem that feedback overheads are high when the terminal device feeds back the CSI. The solution is specifically as follows:

Two codebooks are preset on both the terminal device and the access network device, and are a codebook A and a codebook B. The codebook A includes a plurality of first matrices related to $\mathbf{W}_1$ and indexes corresponding to the first matrices. The codebook B includes a plurality of second matrices related to $\mathbf{W}_2$ and indexes corresponding to the second matrices, and some column vectors in a first matrix included in the codebook B are orthogonal to remaining column vectors of the matrix. Optionally, a column vector in the first $\left\lceil \dfrac{N}{2} \right\rceil$ column vectors in the second matrix may be orthogonal to a column vector in the last $(N - \left\lceil \dfrac{N}{2} \right\rceil)$ column vectors in the second matrix. Optionally, a $(k + \left\lceil \dfrac{N}{2} \right\rceil)^{th}$ column vector in the second matrix may be orthogonal to a $k^{th}$ column vector in the second matrix, k is a positive integer in $[1, \left\lceil \dfrac{N}{2} \right\rceil]$, and N is a quantity of columns of the second matrix.

Therefore, after the terminal device obtains $\mathbf{W}_1$ and $\mathbf{W}_2$ based on the precoding matrix $\mathbf{W}$, the terminal device selects the second matrix most approximate to $\mathbf{W}_2$ from the codebook B, and indicates the second matrix to the access network device by using the second PMI. For example, the terminal device may add an index of the second matrix to the second PMI and send the index to the access network device. The second matrices included in the codebook B are all matrices having orthogonality, and the codebook B includes fewer matrices compared with a prior-art codebook. Therefore, the terminal device indicates, to the access network device by using the second PMI, a second matrix that is in the codebook B and that is used as $\mathbf{W}_2$, and a quantity of bits required by the second PMI is reduced. Therefore, feedback overheads for feeding back the CSI by the terminal device to the access network device are reduced in the technical solution.

Optionally, the index of $\mathbf{W}_2$ included in the second PMI may directly be a value, to be specific, the access network device may directly find, by using the second PMI, the matrix $\mathbf{W}_2$ from the codebook B preset on the access network device side.

Optionally, the index of $\mathbf{W}_2$ included in the second PMI may be a phase matrix C and an amplitude matrix D into which the terminal device splits $\mathbf{W}_2$ (this is because elements in $\mathbf{W}_2$ include both phase information and amplitude information). In addition, two mapping tables are preset on the terminal device, one is a correspondence table between a phase matrix and an index, and the other is a correspondence table between an amplitude matrix and an index. The terminal device UE finds, based on the two tables, an index of a phase matrix approximate to C and an index of an amplitude matrix approximate to D, and reports the two indexes to the base station by using the second PMI. Similarly, there are also two same tables on the base station side. After finding the phase matrix and the amplitude matrix by using the two indexes and the two tables, the base station may obtain $\mathbf{W}_2$ by matrix multiplication. Similarly, due to orthogonality of $\mathbf{W}_2$, there is a relatively small quantity of matrices in the mapping tables corresponding to the phase matrix and the amplitude matrix that are obtained after $\mathbf{W}_2$ is split. Therefore, the terminal device indicates, to the access network device by using the second PMI, a phase matrix that is in the mapping table and that is used as the phase matrix of $\mathbf{W}_2$ and an amplitude matrix that is in the mapping table and that is used as the amplitude matrix of $\mathbf{W}_2$, and a quantity of bits required by the second PMI is reduced. Therefore, feedback overheads for feeding back the CSI by the terminal device to the access network device are reduced in the technical solution.

Optionally, the index of $W_2$ included in the second PMI may alternatively be an amplitude matrix E of a wideband, an amplitude matrix F of a subband, and a phase matrix G of a subband into which the terminal device splits $\mathbf{W}_2$, and then three mapping tables are correspondingly preset on the terminal device. The UE separately determines three indexes by using a similar method, and reports the three indexes to the base station by using the second PMI. Similarly, the base station may obtain $\mathbf{W}_2$ based on the three indexes. In this technical solution, feedback overheads for feeding back the CSI by the terminal device to the access network device are also reduced.

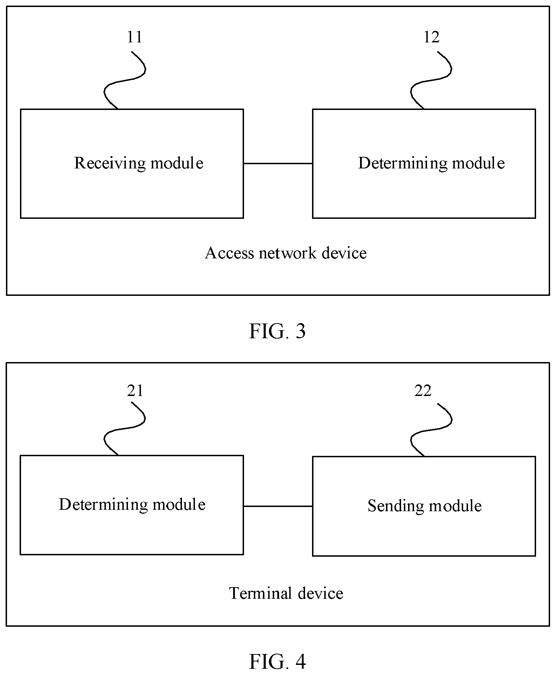

FIG. 3 is a schematic structural diagram of an embodiment of an access network device according to an embodiment of the present invention. As shown in FIG. 3, the access network device includes a receiving module 11 and a determining module 12.

Specifically, the receiving module 11 is configured to receive channel state information CSI reported by a terminal device, where the CSI includes a first precoding matrix indication PMI and a second PMI.

The determining module 12 is configured to determine a precoding matrix $\mathbf{W}$ based on the first PMI, the second PMI, and a preset codebook, where $\mathbf{W}$ meets $\mathbf{W} = \mathbf{W_1} \times \mathbf{W_2}$, $\mathbf{W_1}$ corresponds to the first PMI, $\mathbf{W_2}$ corresponds to the second PMI, the second PMI indicates some column vectors of $\mathbf{W}_2$ and an amplitude association relationship between the some column vectors of $\mathbf{W}_2$ and remaining column vectors of $\mathbf{W}_2$, and a quantity of columns of $\mathbf{W}$ is greater than 2.

Optionally, the receiving module 11 may be implemented by using a corresponding receiver, for example, implemented by using a radio frequency module or a baseband module in the access network device. The determining module 12 may be implemented by using a corresponding component that has a control function, such as a processor, a micro control unit, or a digital processor.

Optionally, the amplitude association relationship between the some column vectors of $\mathbf{W}_2$ and the remaining column vectors of $\mathbf{W}_2$ specifically includes that

amplitudes of the first $\left\lceil \dfrac{N}{2} \right\rceil$ column vectors of $\mathbf{W}_2$ are related to amplitudes of the last $(N - \left\lceil \dfrac{N}{2} \right\rceil)$ column vectors of $\mathbf{W}_2$, and N is a quantity of columns of $\mathbf{W}_2$.

Optionally, that amplitudes of the first $\left\lceil \dfrac{N}{2} \right\rceil$ column vectors of $\mathbf{W}_2$ are related to amplitudes of the last $(N - \left\lceil \dfrac{N}{2} \right\rceil)$ column vectors of $\mathbf{W}_2$ specifically includes that

amplitudes of a $(k + \left\lceil \dfrac{N}{2} \right\rceil)^{\text{th}}$ column vector of $\mathbf{W}_2$ in a first polarization direction of $\mathbf{W}_2$ are related to amplitudes of a $k^{\text{th}}$ column vector of $\mathbf{W}_2$ $\mathbf{W}_2$ in a second polarization direction of $\mathbf{W}^2$, and amplitudes of the $(k + \left\lceil \dfrac{N}{2} \right\rceil)^{\text{th}}$ column vector of $\mathbf{W}_2$ in the second polarization direction of $\mathbf{W}_2$ are related to amplitudes of the $k^{\text{th}}$ column vector of $\mathbf{W}_2$ in the first polarization direction of $\mathbf{W}_2$; and

polarization directions of $\mathbf{W}_2$ include the first polarization direction and the second polarization direction, k is a positive integer in $[1, \left\lceil \dfrac{N}{2} \right\rceil]$, the first $\dfrac{M}{2}$ rows of $\mathbf{W}_2$ are the first polarization direction of $\mathbf{W}_2$, the last $\dfrac{M}{2}$ rows of $\mathbf{W}_2$

are the second polarization direction of $\mathbf{W}_2$, and M is a quantity of rows of $\mathbf{W}_2$.

Optionally, that amplitudes of a $(k + \left\lceil \frac{N}{2} \right\rceil)^{th}$ column vector of $\mathbf{W}_2$ in a first polarization direction of $\mathbf{W}_2$ are related to amplitudes of a $k^{th}$ column vector of $\mathbf{W}_2$ in a second polarization direction of $\mathbf{W}_2$ specifically includes that

the amplitudes of the $(k + \left\lceil \frac{N}{2} \right\rceil)^{th}$ column vector of $\mathbf{W}^2$ in the first polarization direction of $\mathbf{W}_2$ are equal to the amplitudes of the $k^{th}$ column vector of $\mathbf{W}_2$ in the second polarization direction of $\mathbf{W}_2$, and a sequence of the amplitudes

of the $(k + \left\lceil \frac{N}{2} \right\rceil)^{th}$ column vector in the first polarization direction of $\mathbf{W}_2$ is the same as a sequence of the amplitudes of the $k^{th}$ column vector in the second polarization direction of $\mathbf{W}_2$; and

that amplitudes of the $(k + \left\lceil \frac{N}{2} \right\rceil)^{th}$ column vector of $\mathbf{W}_2$ in the second polarization direction of $\mathbf{W}_2$ are related to amplitudes of the $k^{th}$ column vector of $\mathbf{W}_2$ in the first polarization direction of $\mathbf{W}_2$ specifically includes that

the amplitudes of the $(k + \left\lceil \frac{N}{2} \right\rceil)^{th}$ column vector of $\mathbf{W}_2$ in the second polarization direction of $\mathbf{W}_2$ are equal to the amplitudes of the $k^{th}$ column vector of $\mathbf{W}_2$ in the first polarization direction of $\mathbf{W}_2$, and a sequence of the amplitudes of

the $(k + \left\lceil \frac{N}{2} \right\rceil)^{th}$ column vector in the second polarization direction of $\mathbf{W}_2$ is the same as a sequence of the amplitudes of the $k^{th}$ column vector in the first polarization direction of $\mathbf{W}_2$.

Optionally, the second PMI is further used to indicate a phase association relationship between the some column vectors of $\mathbf{W}_2$ and the remaining column vectors of $\mathbf{W}_2$.

Optionally, the phase association relationship between the some column vectors of $\mathbf{W}_2$ and the remaining column vectors of $\mathbf{W}_2$ specifically includes that

phases of the first $\left\lceil \frac{N}{2} \right\rceil$ column vectors of $\mathbf{W}_2$ are related to phases of the last $(N - \left\lceil \frac{N}{2} \right\rceil)$ column vectors of $\mathbf{W}_2$.

Optionally, that phases of the first $\left\lceil \frac{N}{2} \right\rceil$ column vectors of $\mathbf{W}_2$ are related to phases of the last $(N - \left\lceil \frac{N}{2} \right\rceil)$ column vectors of $\mathbf{W}_2$ specifically includes that

phases of a $(k + \left\lceil \frac{N}{2} \right\rceil)^{th}$ column vector of $\mathbf{W}_2$ in a first polarization direction of $\mathbf{W}_2$ are related to phases of a $k^{th}$ column vector of $\mathbf{W}_2$ in a first polarization direction of $\mathbf{W}_2$, and phases of the $(k + \left\lceil \frac{N}{2} \right\rceil)^{th}$ column vector of $\mathbf{W}_2$ in the second polarization direction of $\mathbf{W}_2$ are related to phases of the $k^{th}$ column vector of $\mathbf{W}_2$ in the second polarization direction of $\mathbf{W}_2$ ; or

phases of a $(k + \lceil \frac{N}{2} \rceil)^{th}$ column vector of $\mathbf{W}_2$ in a first polarization direction of $\mathbf{W}_2$ are related to phases of a $k^{th}$ column vector of $\mathbf{W}_2$ in a second polarization direction of $\mathbf{W}_2$, and phases of the $(k + \lceil \frac{N}{2} \rceil)^{th}$ column vector of $\mathbf{W}_2$ in the second polarization direction of $\mathbf{W}_2$ are related to phases of the $k^{th}$ column vector of $\mathbf{W}_2$ in the first polarization direction of $\mathbf{W}_2$; and

polarization directions of $\mathbf{W}_2$ include the first polarization direction and the second polarization direction, k is a positive integer in $[1, \lceil \frac{N}{2} \rceil]$, the first $\frac{M}{2}$ rows of $\mathbf{W}_2$ are the first polarization direction of $\mathbf{W}_2$, the last $\frac{M}{2}$ rows of $\mathbf{W}_2$ are the second polarization direction of $\mathbf{W}_2$, and M is a quantity of rows of $\mathbf{W}_2$.

Optionally, that phases of a $(k + \lceil \frac{N}{2} \rceil)^{th}$ column vector of $\mathbf{W}_2$ in a first polarization direction of $\mathbf{W}_2$ are related to phases of a $k^{th}$ column vector of $\mathbf{W}_2$ in a first polarization direction of $\mathbf{W}_2$, and phases of the $(k + \lceil \frac{N}{2} \rceil)^{th}$ column vector of $\mathbf{W}_2$ in the second polarization direction of $\mathbf{W}_2$ are related to phases of the $k^{th}$ column vector of $\mathbf{W}_2$ in the second polarization direction of $\mathbf{W}_2$ specifically includes that

a phase of an element in an $(iy)^{th}$ row in the first polarization direction of the $k^{th}$ column vector of $\mathbf{W}_2$ is rotated by an $i^{th}$ first angle $a_y$, to obtain a phase of an element in an $(iy)^{th}$ row in the first polarization direction of the $(k + \lceil \frac{N}{2} \rceil)^{th}$ column vector of $\mathbf{W}_2$ ; and

a phase of an element in an $(iy)^{th}$ row in the second polarization direction of the $k^{th}$ column vector of $\mathbf{W}_2$ is rotated by an $i^{th}$ second angle $b_y$, to obtain a phase of an element in an $(iy)^{th}$ row in the second polarization direction of the $(k + \lceil \frac{N}{2} \rceil)^{th}$ column vector of $\mathbf{W}_2$, where

$a_y$ and $b_y$ meet $|a_y - b_y| \mathrm{mod}(2\pi) = (x)\mathrm{mod}(2\pi)$ indicates that a remainder is obtained by dividing $x$ by $2\pi$, a value range of $a_y$ or $b_y$ is $[0,2\pi)$ , and $y = 1, \ldots, \frac{M}{2}$ .

Optionally, that phases of a $(k + \lceil \frac{N}{2} \rceil)^{th}$ column vector of $\mathbf{W}_2$ in a first polarization direction of $\mathbf{W}_2$ are related to phases of a $k^{th}$ column vector of $\mathbf{W}_2$ in a second polarization direction of $\mathbf{W}_2$, and phases of the $(k + \lceil \frac{N}{2} \rceil)^{th}$ column vector of $\mathbf{W}_2$ in the second polarization direction of $\mathbf{W}_2$ are related to phases of the $k^{th}$ column vector of $\mathbf{W}_2$ in the first polarization direction of $\mathbf{W}_2$ specifically includes that

a phase of an element in a $y^{th}$ row in the first polarization direction of the $k^{th}$ column vector of $\mathbf{W}_2$ is conjugated and

rotated by $a_y$, to obtain a phase of an element in a $y^{th}$ row in the second polarization direction of the $(k + \left\lceil \dfrac{N}{2} \right\rceil)^{th}$ column vector of $\mathbf{W}_2$ ; and

a phase of an element in a $y^{th}$ row in the second polarization direction of the $k^{th}$ column vector of $\mathbf{W}_2$ is conjugated and rotated by $b_y$, to obtain a phase of an element in a $y^{th}$ row in the first polarization direction of the $(k + \left\lceil \dfrac{N}{2} \right\rceil)^{th}$ column vector of $\mathbf{W}_2$, where

$a_y$ and $b_y$ meet $|a_y - b_y| \bmod(2\pi) = \pi$, $(x)\bmod(2\pi)$ indicates that a remainder is obtained by dividing $x$ by $2\pi$, a value range $y = 1, \dots, \dfrac{M}{2}$ of $a_y$ or $b_y$ is $[0, 2\pi)$, and .

The access network device provided in the embodiments of this application may execute the foregoing method embodiment, and an implementation principle and technical effect are similar, which is not repeatedly described herein.

FIG. 4 is a schematic structural diagram of an embodiment of a terminal device according to an embodiment of the present invention. As shown in FIG. 4, the terminal device includes a determining module 21 and a sending module 22.

Specifically, the determining module 21 is configured to determine a precoding matrix $\mathbf{W}$ based on a reference signal delivered by an access network device, where $\mathbf{W}$ meets $\mathbf{W} = \mathbf{W}_1 \times \mathbf{W}_2$.

The sending module 22 is configured to send channel state information CSI to the access network device, where the CSI includes a first precoding matrix indication PMI and a second PMI, $\mathbf{W}_1$ corresponds to the first PMI, $\mathbf{W}_2$ corresponds to the second PMI, the second PMI indicates some column vectors of $\mathbf{W}_2$ and an amplitude association relationship between the some column vectors of $\mathbf{W}_2$ and remaining column vectors of $\mathbf{W}_2$, and a quantity of columns of $\mathbf{W}$ is greater than 2.

Optionally, the processing module 21 may be implemented by using a corresponding component that has a control function, such as a processor, a micro control unit, or a digital processor. Optionally, the sending module 22 may be implemented by using a corresponding receiver, for example, implemented by using a radio frequency module or a baseband module in the terminal device.

Optionally, the amplitude association relationship between the some column vectors of $\mathbf{W}_2$ and the remaining column vectors of $\mathbf{W}_2$ specifically includes that

amplitudes of the first $\left\lceil \dfrac{N}{2} \right\rceil$ column vectors of $\mathbf{W}_2$ are related to amplitudes of the last $(N - \left\lceil \dfrac{N}{2} \right\rceil)$ column vectors of $\mathbf{W}_2$, and N is a quantity of columns of $\mathbf{W}_2$.

Optionally, that amplitudes of the first $\left\lceil \dfrac{N}{2} \right\rceil$ column vectors of $\mathbf{W}_2$ are related to amplitudes of the last $(N - \left\lceil \dfrac{N}{2} \right\rceil)$ column vectors of $\mathbf{W}_2$ specifically includes that

amplitudes of a $(k + \left\lceil \dfrac{N}{2} \right\rceil)^{th}$ column vector of $\mathbf{W}_2$ in a first polarization direction of $\mathbf{W}_2$ are related to amplitudes of a $k^{th}$ column vector of $\mathbf{W}_2$ in a second polarization direction of $\mathbf{W}_2$, and amplitudes of the $(k + \left\lceil \dfrac{N}{2} \right\rceil)^{th}$ column vector of $\mathbf{W}_2$ in the second polarization direction of $\mathbf{W}_2$ are related to amplitudes of the $k^{th}$ column vector of $\mathbf{W}_2$ in the first

polarization direction of $\mathbf{W}_2$; and

polarization directions of $\mathbf{W}_2$ include the first polarization direction and the second polarization direction, k is a positive

integer in $[1, \lceil \frac{N}{2} \rceil]$, the first $\frac{M}{2}$ rows of $\mathbf{W}_2$ are the first polarization direction of $\mathbf{W}_2$, the last $\frac{M}{2}$ rows of $\mathbf{W}_2$ are the second polarization direction of $\mathbf{W}_2$, and M is a quantity of rows of $\mathbf{W}_2$.

Optionally, that amplitudes of a $(k + \lceil \frac{N}{2} \rceil)^{th}$ column vector of $\mathbf{W}_2$ in a first polarization direction of $\mathbf{W}_2$ are related to amplitudes of a $k^{th}$ column vector of $\mathbf{W}_2$ in a second polarization direction of $\mathbf{W}_2$ specifically includes that

the amplitudes of the $(k + \lceil \frac{N}{2} \rceil)^{th}$ column vector of $\mathbf{W}_2$ in the first polarization direction of $\mathbf{W}_2$ are equal to the amplitudes of the $k^{th}$ column vector of $\mathbf{W}_2$ in the second polarization direction of $\mathbf{W}_2$, and a sequence of the amplitudes

of the $(k + \lceil \frac{N}{2} \rceil)^{th}$ column vector in the first polarization direction of $\mathbf{W}_2$ is the same as a sequence of the amplitudes of the $k^{th}$ column vector in the second polarization direction of $\mathbf{W}_2$; and

that amplitudes of the $(k + \lceil \frac{N}{2} \rceil)^{th}$ column vector of $\mathbf{W}_2$ in the second polarization direction of $\mathbf{W}_2$ are related to amplitudes of the $k^{th}$ column vector of $\mathbf{W}_2$ in the first polarization direction of $\mathbf{W}_2$ specifically includes that

the amplitudes of the $(k + \lceil \frac{N}{2} \rceil)^{th}$ column vector of $\mathbf{W}_2$ in the second polarization direction of $\mathbf{W}_2$ are equal to the amplitudes of the $k^{th}$ column vector of $\mathbf{W}_2$ in the first polarization direction of $\mathbf{W}_2$, and a sequence of the amplitudes of

the $(k + \lceil \frac{N}{2} \rceil)^{th}$ column vector in the second polarization direction of $\mathbf{W}_2$ is the same as a sequence of the amplitudes of the $k^{th}$ column vector in the first polarization direction of $\mathbf{W}_2$.

Optionally, the second PMI is further used to indicate a phase association relationship between the some column vectors of $\mathbf{W}_2$ and the remaining column vectors of $\mathbf{W}_2$.

Optionally, the phase association relationship between the some column vectors of $\mathbf{W}_2$ and the remaining column vectors of $\mathbf{W}_2$ specifically includes that

phases of the first $\lceil \frac{N}{2} \rceil$ column vectors of $\mathbf{W}_2$ are related to phases of the last $(N - \lceil \frac{N}{2} \rceil)$ column vectors of $\mathbf{W}_2$.

Optionally, that phases of the first $\lceil \frac{N}{2} \rceil$ column vectors of $\mathbf{W}_2$ are related to phases of the last $(N - \lceil \frac{N}{2} \rceil)$ column vectors of $\mathbf{W}_2$ specifically includes that

phases of a $(k + \lceil \frac{N}{2} \rceil)^{th}$ column vector of $\mathbf{W}_2$ in a first polarization direction of $\mathbf{W}_2$ are related to phases of a $k^{th}$

column vector of $\mathbf{W}_2$ in a first polarization direction of $\mathbf{W}_2$, and phases of the $(\mathrm{k} + \left\lceil \frac{N}{2} \right\rceil)^{\text{th}}$ column vector of $\mathbf{W}_2$ in the second polarization direction of $\mathbf{W}_2$ are related to phases of the $\mathrm{k}^{\text{th}}$ column vector of $\mathbf{W}_2$ in the second polarization direction of $\mathbf{W}_2$ ; or

phases of a $(\mathrm{k} + \left\lceil \frac{N}{2} \right\rceil)^{\text{th}}$ column vector of $\mathbf{W}_2$ in a first polarization direction of $\mathbf{W}_2$ are related to phases of a $\mathrm{k}^{\text{th}}$

column vector of $\mathbf{W}_2$ in a second polarization direction of $\mathbf{W}_2$, and phases of the $(\mathrm{k} + \left\lceil \frac{N}{2} \right\rceil)^{\text{th}}$ column vector of $\mathbf{W}_2$ in the second polarization direction of $\mathbf{W}_2$ are related to phases of the $\mathrm{k}^{\text{th}}$ column vector of $\mathbf{W}_2$ in the first polarization direction of $\mathbf{W}_2$; and

polarization directions of $\mathbf{W}_2$ include the first polarization direction and the second polarization direction, k is a positive

integer in $[1, \left\lceil \frac{N}{2} \right\rceil]$, the first $\frac{M}{2}$ rows of $\mathbf{W}_2$ are the first polarization direction of $\mathbf{W}_2$, the last $\frac{M}{2}$ rows of $\mathbf{W}_2$ are the second polarization direction of $\mathbf{W}_2$, and M is a quantity of rows of $\mathbf{W}_2$.

Optionally, that phases of a $(\mathrm{k} + \left\lceil \frac{N}{2} \right\rceil)^{\text{th}}$ column vector of $\mathbf{W}_2$ in a first polarization direction of $\mathbf{W}_2$ are

related to phases of a $\mathrm{k}^{\text{th}}$ column vector of $\mathbf{W}_2$ in a first polarization direction of $\mathbf{W}_2$, and phases of the $(\mathrm{k} + \left\lceil \frac{N}{2} \right\rceil)^{\text{th}}$ column vector of $\mathbf{W}_2$ in the second polarization direction of $\mathbf{W}_2$ are related to phases of the $\mathrm{k}^{\text{th}}$ column vector of $\mathbf{W}_2$ in the second polarization direction of $\mathbf{W}_2$ specifically includes that

a phase of an element in a $\mathrm{y}^{\text{th}}$ row in the first polarization direction of the $\mathrm{k}^{\text{th}}$ column vector of $\mathbf{W}_2$ is rotated by an angle of $a_y$, to obtain a phase of an element in a $\mathrm{y}^{\text{th}}$ row in the first polarization direction of the $(\mathrm{k} + \left\lceil \frac{N}{2} \right\rceil)^{\text{th}}$ column vector of $\mathbf{W}_2$; and

a phase of an element in a $\mathrm{y}^{\text{th}}$ row in the second polarization direction of the $\mathrm{k}^{\text{th}}$ column vector of $\mathbf{W}_2$ is rotated by an angle of $b_y$, to obtain a phase of an element in a $\mathrm{y}^{\text{th}}$ row in the second polarization direction of the $(\mathrm{k} + \left\lceil \frac{N}{2} \right\rceil)^{\text{th}}$ column vector of $\mathbf{W}_2$, where

$a_y$ and $b_y$ meet $|a_y\text{-}b_y|\mathrm{mod}(2\pi)=\pi$, $(x)\mathrm{mod}(2\pi)$ indicates that a remainder is obtained by dividing $x$ by $2\pi$, a value range

of $a_y$ or $b_y$ is [0,2$\pi$), and $y = 1, \ldots, \frac{M}{2}$ .

Optionally, that phases of a $(\mathrm{k} + \left\lceil \frac{N}{2} \right\rceil)^{\text{th}}$ column vector of $\mathbf{W}_2$ in a first polarization direction of $\mathbf{W}_2$ are

related to phases of a $k^{th}$ column vector of $\mathbf{W}_2$ in a second polarization direction of $\mathbf{W}_2$, and phases of the $(k + \lceil \frac{N}{2} \rceil)^{th}$ column vector of $\mathbf{W}_2$ in the second polarization direction of $\mathbf{W}_2$ are related to phases of the $k^{th}$ column vector of $\mathbf{W}_2$ in the first polarization direction of $\mathbf{W}_2$ specifically includes that

a phase of an element in a $y^{th}$ row in the first polarization direction of the $k^{th}$ column vector of $\mathbf{W}_2$ is conjugated and rotated by an angle of $a_y$, to obtain a phase of an element in a $y^{th}$ row in the second polarization direction of the $(k + \lceil \frac{N}{2} \rceil)^{th}$ column vector of $\mathbf{W}_2$ ; and

a phase of an element in a $y^{th}$ row in the second polarization direction of the $k^{th}$ column vector of $\mathbf{W}_2$ is conjugated and rotated by an angle of $b_y$, to obtain a phase of an element in a $y^{th}$ row in the first polarization direction of the $(k + \lceil \frac{N}{2} \rceil)^{th}$ column vector of $\mathbf{W}_2$, where

$a_y$ and $b_y$ meet $|a_y - b_y| \mathrm{mod}(2\pi) = \pi$, $(x)\mathrm{mod}(2\pi)$ indicates that a remainder is obtained by dividing $x$ by $2\pi$, a value range of $a_y$ or $b_y$ is $[0, 2\pi)$, and $y = 1, \ldots, \dfrac{M}{2}$ .

The terminal device provided in the embodiments of this application may execute the foregoing method embodiment, and an implementation principle and technical effect are similar, which is not repeatedly described herein.

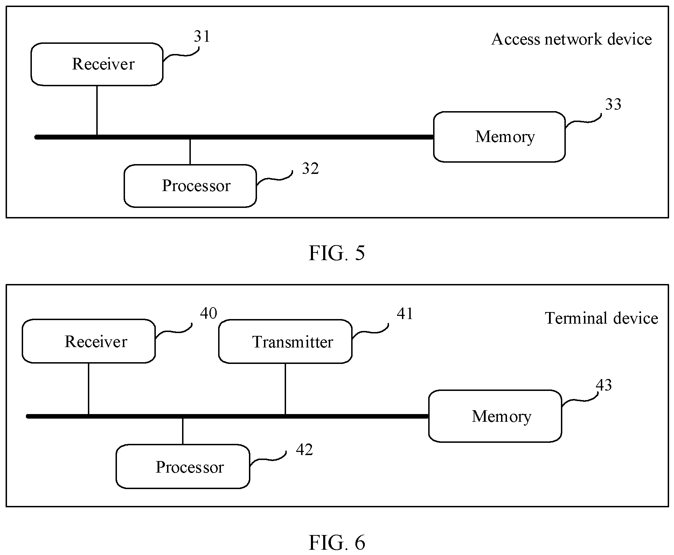

FIG. 5 is a schematic structural diagram of another embodiment of an access network device according to an embodiment of the present invention. As shown in FIG. 5, the network device may include a receiver 31, a processor 32, and a memory 33. The memory 33 may include a high-speed RAM memory, or may include a non-volatile memory NVM, for example, at least one magnetic disk storage. The memory 33 may store various programs, used to complete various processing functions and implement method steps in this embodiment. Optionally, the receiver 31 in this embodiment may be a radio frequency module or a baseband module of an access network device.

In this embodiment, the receiver 31 is configured to receive channel state information CSI reported by a terminal device, where the CSI includes a first precoding matrix indication PMI and a second PMI.

The processor 32 is configured to determine a precoding matrix $\mathbf{W}$ based on the first PMI, the second PMI, and a preset codebook, where $\mathbf{W}$ meets $\mathbf{W} = \mathbf{W}_1 \times \mathbf{W}_2$, $\mathbf{W}_1$ corresponds to the first PMI, $\mathbf{W}_2$ corresponds to the second PMI, the second PMI indicates some column vectors of $\mathbf{W}_2$ and an amplitude association relationship between the some column vectors of $\mathbf{W}_2$ and remaining column vectors of $\mathbf{W}_2$, and a quantity of columns of $\mathbf{W}$ is greater than 2.

Optionally, the amplitude association relationship between the some column vectors of $\mathbf{W}_2$ and the remaining column vectors of $\mathbf{W}_2$ specifically includes that

amplitudes of the first $\lceil \frac{N}{2} \rceil$ column vectors of $\mathbf{W}_2$ are related to amplitudes of the last $(N - \lceil \frac{N}{2} \rceil)$ column vectors of $\mathbf{W}_2$, and N is a quantity of columns of $\mathbf{W}_2$.

Optionally, that amplitudes of the first $\lceil \frac{N}{2} \rceil$ column vectors of $\mathbf{W}_2$ are related to amplitudes of the last $(N - \lceil \frac{N}{2} \rceil)$ column vectors of $\mathbf{W}_2$ specifically includes that

amplitudes of a $(k + \lceil \frac{N}{2} \rceil)^{th}$ column vector of $\mathbf{W}_2$ in a first polarization direction of $\mathbf{W}_2$ are related to amplitudes of a $k^{th}$ column vector of $\mathbf{W}_2$ in a second polarization direction of $\mathbf{W}_2$, and amplitudes of the $(k + \lceil \frac{N}{2} \rceil)^{th}$ column vector of $\mathbf{W}_2$ in the second polarization direction of $\mathbf{W}_2$ are related to amplitudes of the $k^{th}$ column vector of $\mathbf{W}_2$ in the first polarization direction of $\mathbf{W}_2$; and

polarization directions of $\mathbf{W}_2$ include the first polarization direction and the second polarization direction, k is a positive integer in $[1, \lceil \frac{N}{2} \rceil]$, the first $\frac{M}{2}$ rows of $\mathbf{W}_2$ are the first polarization direction of $\mathbf{W}_2$, the last $\frac{M}{2}$ rows of $\mathbf{W}_2$ are the second polarization direction of $\mathbf{W}_2$, and M is a quantity of rows of $\mathbf{W}_2$.

Optionally, that amplitudes of a $(k + \lceil \frac{N}{2} \rceil)^{th}$ column vector of $\mathbf{W}_2$ in a first polarization direction of $\mathbf{W}_2$ are related to amplitudes of a $k^{th}$ column vector of $\mathbf{W}_2$ in a second polarization direction of $\mathbf{W}_2$ specifically includes that

the amplitudes of the $(k + \lceil \frac{N}{2} \rceil)^{th}$ column vector of $\mathbf{W}_2$ in the first polarization direction of $\mathbf{W}_2$ are equal to the amplitudes of the $k^{th}$ column vector of $\mathbf{W}_2$ in the second polarization direction of $\mathbf{W}_2$, and a sequence of the amplitudes of the $(k + \lceil \frac{N}{2} \rceil)^{th}$ column vector in the first polarization direction of $\mathbf{W}_2$ is the same as a sequence of the amplitudes of the $k^{th}$ column vector in the second polarization direction of $\mathbf{W}_2$; and

that amplitudes of the $(k + \lceil \frac{N}{2} \rceil)^{th}$ column vector of $\mathbf{W}_2$ in the second polarization direction of $\mathbf{W}_2$ are related to amplitudes of the $k^{th}$ column vector of $\mathbf{W}_2$ in the first polarization direction of $\mathbf{W}_2$ specifically includes that

the amplitudes of the $(k + \lceil \frac{N}{2} \rceil)^{th}$ column vector of $\mathbf{W}_2$ in the second polarization direction of $\mathbf{W}_2$ are equal to the amplitudes of the $k^{th}$ column vector of $\mathbf{W}_2$ in the first polarization direction of $\mathbf{W}_2$, and a sequence of the amplitudes of the $(k + \lceil \frac{N}{2} \rceil)^{th}$ column vector in the second polarization direction of $\mathbf{W}_2$ is the same as a sequence of the amplitudes of the $k^{th}$ column vector in the first polarization direction of $\mathbf{W}_2$.

Optionally, the second PMI is further used to indicate a phase association relationship between the some column vectors of $\mathbf{W}_2$ and the remaining column vectors of $\mathbf{W}_2$.

Optionally, the phase association relationship between the some column vectors of $\mathbf{W}_2$ and the remaining column vectors of $\mathbf{W}_2$ specifically includes that

phases of the first $\lceil \frac{N}{2} \rceil$ column vectors of $\mathbf{W}_2$ are related to phases of the last $(N - \lceil \frac{N}{2} \rceil)$ column vectors of $\mathbf{W}_2$.

Optionally, that phases of the first $\lceil \frac{N}{2} \rceil$ column vectors of $\mathbf{W}_2$ are related to phases of the last $(N - \lceil \frac{N}{2} \rceil)$

column vectors of $\mathbf{W}_2$ specifically includes that

phases of a $(k + \left\lceil \dfrac{N}{2} \right\rceil)^{th}$ column vector of $\mathbf{W}_2$ in a first polarization direction of $\mathbf{W}_2$ are related to phases of a $k^{th}$ column vector of $\mathbf{W}_2$ in a first polarization direction of $\mathbf{W}_2$, and phases of the $(k + \left\lceil \dfrac{N}{2} \right\rceil)^{th}$ column vector of $\mathbf{W}_2$ in the second polarization direction of $\mathbf{W}_2$ is related to a phase the $k^{th}$ column vector of $\mathbf{W}_2$ in the second polarization direction of $\mathbf{W}_2$ ; or

phases of a $(k + \left\lceil \dfrac{N}{2} \right\rceil)^{th}$ column vector of $\mathbf{W}_2$ in a first polarization direction of $\mathbf{W}_2$ are related to phases of a $k^{th}$ column vector of $\mathbf{W}_2$ in a second polarization direction of $\mathbf{W}_2$, and phases of the $(k + \left\lceil \dfrac{N}{2} \right\rceil)^{th}$ column vector of $\mathbf{W}_2$ in the second polarization direction of $\mathbf{W}_2$ are related to phases of the $k^{th}$ column vector of $\mathbf{W}_2$ in the first polarization direction of $\mathbf{W}_2$ ; and

polarization directions of $\mathbf{W}_2$ include the first polarization direction and the second polarization direction, k is a positive integer in $[1, \left\lceil \dfrac{N}{2} \right\rceil]$, the first $\dfrac{M}{2}$ rows of $\mathbf{W}_2$ are the first polarization direction of $\mathbf{W}_2$, the last $\dfrac{M}{2}$ rows of $\mathbf{W}_2$ are the second polarization direction of $\mathbf{W}_2$, and M is a quantity of rows of $\mathbf{W}_2$.

Optionally, that phases of a $(k + \left\lceil \dfrac{N}{2} \right\rceil)^{th}$ column vector of $\mathbf{W}_2$ in a first polarization direction of $\mathbf{W}_2$ are related to phases of a $k^{th}$ column vector of $\mathbf{W}_2$ in a first polarization direction of $\mathbf{W}_2$, and phases of the $(k + \left\lceil \dfrac{N}{2} \right\rceil)^{th}$ column vector of $\mathbf{W}_2$ in the second polarization direction of $\mathbf{W}_2$ are related to phases of the $k^{th}$ column vector of $\mathbf{W}_2$ in the second polarization direction of $\mathbf{W}_2$ specifically includes that

a phase of an element in a $y^{th}$ row in the first polarization direction of the $k^{th}$ column vector of $\mathbf{W}_2$ is rotated by an angle of $a_y$, to obtain a phase of an element in a $y^{th}$ row in the first polarization direction of the $(k + \left\lceil \dfrac{N}{2} \right\rceil)^{th}$ column vector of $\mathbf{W}_2$; and

a phase of an element in a $y^{th}$ row in the second polarization direction of the $k^{th}$ column vector of $\mathbf{W}_2$ is rotated by an angle of $b_y$, to obtain a phase of an element in a $y^{th}$ row in the second polarization direction of the $(k + \left\lceil \dfrac{N}{2} \right\rceil)^{th}$ column vector of $\mathbf{W}_2$, where

$a_y$ and $b_y$ meet $|a_y - b_y| \bmod(2\pi) = \pi$, $(x) \bmod(2\pi)$ indicates that a remainder is obtained by dividing $x$ by $2\pi$, a value range of $a_y$ or $b_y$ is $[0, 2\pi)$, and $y = 1, \ldots, \dfrac{M}{2}$.

Optionally, that phases of a $(\mathrm{k} + \lceil\frac{N}{2}\rceil)^{\mathrm{th}}$ column vector of $\mathbf{W}_2$ in a first polarization direction of $\mathbf{W}_2$ are related to phases of a $\mathrm{k}^{\mathrm{th}}$ column vector of $\mathbf{W}_2$ in a second polarization direction of $\mathbf{W}_2$, and phases of the $(\mathrm{k} + \lceil\frac{N}{2}\rceil)^{\mathrm{th}}$ column vector of $\mathbf{W}_2$ in the second polarization direction of $\mathbf{W}_2$ are related to phases of the $\mathrm{k}^{\mathrm{th}}$ column vector of $\mathbf{W}_2$ in the first polarization direction of $\mathbf{W}_2$ specifically includes that

a phase of an element in a $\mathrm{y}^{\mathrm{th}}$ row in the first polarization direction of the $\mathrm{k}^{\mathrm{th}}$ column vector of $\mathbf{W}_2$ is conjugated and rotated by $a_y$, to obtain a phase of an element in a $\mathrm{y}^{\mathrm{th}}$ row in the second polarization direction of the $(\mathrm{k} + \lceil\frac{N}{2}\rceil)^{\mathrm{th}}$ column vector of $\mathbf{W}_2$ ; and

a phase of an element in a $\mathrm{y}^{\mathrm{th}}$ row in the second polarization direction of the $\mathrm{k}^{\mathrm{th}}$ column vector of $\mathbf{W}_2$ is conjugated and rotated by $b_y$, to obtain a phase of an element in a $\mathrm{y}^{\mathrm{th}}$ row in the first polarization direction of the $(\mathrm{k} + \lceil\frac{N}{2}\rceil)^{\mathrm{th}}$ column vector of $\mathbf{W}_2$, where

$a_y$ and $b_y$ meet $|a_y\text{-}b_y|\mathrm{mod}(2\pi)=\pi$, $(x)\mathrm{mod}(2\pi)$ indicates that a remainder is obtained by dividing $x$ by $2\pi$, a value range of $a_y$ or $b_y$ is $[0, 2\pi)$, and $y = 1, \ldots, \frac{M}{2}$.

The access network device provided in the embodiments of this application may execute the foregoing method embodiment, and an implementation principle and technical effect are similar, which is not repeatedly described herein.

FIG. 6 is a schematic structural diagram of another embodiment of a terminal device according to an embodiment of the present invention. As shown in FIG. 6, the terminal device may include a receiver 40, a transmitter 41, a processor 42, and a memory 43. The memory 43 may include a high-speed RAM memory, or may include a non-volatile memory NVM, for example, at least one magnetic disk storage. The memory 43 may store various programs, used to complete various processing functions and implement method steps in this embodiment. Optionally, the receiver 40 and the receiver 41 in this embodiment may be a radio frequency module or a baseband module of the terminal device.

In this embodiment, the processor 42 is configured to determine a precoding matrix $\mathbf{W}$ based on a reference signal delivered by an access network device received by the receiver 40, where $\mathbf{W}$ meets $\mathbf{W} = \mathbf{W}_1 \times \mathbf{W}_2$.

The transmitter 41 is configured to send channel state information CSI to the access network device, where the CSI includes a first precoding matrix indication PMI and a second PMI, $\mathbf{W}_1$ corresponds to the first PMI, $\mathbf{W}_2$ corresponds to the second PMI, the second PMI indicates some column vectors of $\mathbf{W}_2$ and an amplitude association relationship between the some column vectors of $\mathbf{W}_2$ and remaining column vectors of $\mathbf{W}_2$, and a quantity of columns of $\mathbf{W}$ is greater than 2.

Optionally, the amplitude association relationship between the some column vectors of $\mathbf{W}_2$ and the remaining column vectors of $\mathbf{W}_2$ specifically includes that

amplitudes of the first $\lceil\frac{N}{2}\rceil$ column vectors of $\mathbf{W}_2$ are related to amplitudes of the last $(\mathrm{N} - \lceil\frac{N}{2}\rceil)$ column vectors of $\mathbf{W}_2$, and N is a quantity of columns of $\mathbf{W}_2$.

Optionally, that amplitudes of the first $\lceil\frac{N}{2}\rceil$ column vectors of $\mathbf{W}_2$ are related to amplitudes of the last

$(N - \left\lceil \dfrac{N}{2} \right\rceil)$ column vectors of $\mathbf{W}_2$ specifically includes that

amplitudes of a $(k + \left\lceil \dfrac{N}{2} \right\rceil)^{\text{th}}$ column vector of $\mathbf{W}_2$ in a first polarization direction of $\mathbf{W}_2$ are related to amplitudes of

a $k^{\text{th}}$ column vector of $\mathbf{W}_2$ in a second polarization direction of $\mathbf{W}_2$, and amplitudes of the $(k + \left\lceil \dfrac{N}{2} \right\rceil)^{\text{th}}$ column vector of $\mathbf{W}_2$ in the second polarization direction of $\mathbf{W}_2$ are related to amplitudes of the $k^{\text{th}}$ column vector of $\mathbf{W}_2$ in the first polarization direction of $\mathbf{W}_2$ ; and

polarization directions of $\mathbf{W}_2$ include the first polarization direction and the second polarization direction, k is a positive

integer in $[1, \left\lceil \dfrac{N}{2} \right\rceil]$, the first $\dfrac{M}{2}$ rows of $\mathbf{W}_2$ are the first polarization direction of $\mathbf{W}_2$, the last $\dfrac{M}{2}$ rows of $\mathbf{W}_2$ are the second polarization direction of $\mathbf{W}_2$, and M is a quantity of rows of $\mathbf{W}_2$.

Optionally, that amplitudes of a $(k + \left\lceil \dfrac{N}{2} \right\rceil)^{\text{th}}$ column vector of $\mathbf{W}_2$ in a first polarization direction of $\mathbf{W}_2$ are related to amplitudes of a $k^{\text{th}}$ column vector of $\mathbf{W}_2$ in a second polarization direction of $\mathbf{W}_2$ specifically includes that

the amplitudes of the $(k + \left\lceil \dfrac{N}{2} \right\rceil)^{\text{th}}$ column vector of $\mathbf{W}_2$ in the first polarization direction of $\mathbf{W}_2$ are equal to the amplitudes of the $k^{\text{th}}$ column vector of $\mathbf{W}_2$ in the second polarization direction of $\mathbf{W}_2$, and a sequence of the amplitudes

of the $(k + \left\lceil \dfrac{N}{2} \right\rceil)^{\text{th}}$ column vector in the first polarization direction of $\mathbf{W}_2$ is the same as a sequence of the amplitudes of the $k^{\text{th}}$ column vector in the second polarization direction of $\mathbf{W}_2$ ; and

that amplitudes of the $(k + \left\lceil \dfrac{N}{2} \right\rceil)^{\text{th}}$ column vector of $\mathbf{W}_2$ in the second polarization direction of $\mathbf{W}_2$ are related to amplitudes of the $k^{\text{th}}$ column vector of $\mathbf{W}_2$ in the first polarization direction of $\mathbf{W}_2$ specifically includes that

the amplitudes of the $(k + \left\lceil \dfrac{N}{2} \right\rceil)^{\text{th}}$ column vector of $\mathbf{W}_2$ in the second polarization direction of $\mathbf{W}_2$ are equal to the amplitudes of the $k^{\text{th}}$ column vector of $\mathbf{W}_2$ in the first polarization direction of $\mathbf{W}_2$, and a sequence of the amplitudes of

the $(k + \left\lceil \dfrac{N}{2} \right\rceil)^{\text{th}}$ column vector in the second polarization direction of $\mathbf{W}_2$ is the same as a sequence of the amplitudes of the $k^{\text{th}}$ column vector in the first polarization direction of $\mathbf{W}_2$.

Optionally, the second PMI is further used to indicate a phase association relationship between the some column vectors of $\mathbf{W}_2$ and the remaining column vectors of $\mathbf{W}_2$.

Optionally, the phase association relationship between the some column vectors of $\mathbf{W}_2$ and the remaining

column vectors of $\mathbf{W}_2$ specifically includes that

phases of the first $\left\lceil \dfrac{N}{2} \right\rceil$ column vectors of $\mathbf{W}_2$ are related to phases of the last $\left( N - \left\lceil \dfrac{N}{2} \right\rceil \right)$ column vectors of $\mathbf{W}_2$.

Optionally, that phases of the first $\left\lceil \dfrac{N}{2} \right\rceil$ column vectors of $\mathbf{W}_2$ are related to phases of the last $\left( N - \left\lceil \dfrac{N}{2} \right\rceil \right)$ column vectors of $\mathbf{W}_2$ specifically includes that

phases of a $\left( k + \left\lceil \dfrac{N}{2} \right\rceil \right)^{\text{th}}$ column vector of $\mathbf{W}_2$ in a first polarization direction of $\mathbf{W}_2$ are related to phases of a $k^{\text{th}}$ column vector of $\mathbf{W}_2$ in a first polarization direction of $\mathbf{W}_2$, and phases of the $\left( k + \left\lceil \dfrac{N}{2} \right\rceil \right)^{\text{th}}$ column vector of $\mathbf{W}_2$ in the second polarization direction of $\mathbf{W}_2$ are related to phases of the $k^{\text{th}}$ column vector of $\mathbf{W}_2$ in the second polarization direction of $\mathbf{W}_2$; or

phases of a $\left( k + \left\lceil \dfrac{N}{2} \right\rceil \right)^{\text{th}}$ column vector of $\mathbf{W}_2$ in a first polarization direction of $\mathbf{W}_2$ are related to phases of a $k^{\text{th}}$ column vector of $\mathbf{W}_2$ in a second polarization direction of $\mathbf{W}_2$, and phases of the $\left( k + \left\lceil \dfrac{N}{2} \right\rceil \right)^{\text{th}}$ column vector of $\mathbf{W}_2$ in the second polarization direction of $\mathbf{W}_2$ are related to phases of the $k^{\text{th}}$ column vector of $\mathbf{W}_2$ in the first polarization direction of $\mathbf{W}_2$ ; and

polarization directions of $\mathbf{W}_2$ include the first polarization direction and the second polarization direction, k is a positive integer in $\left[ 1, \left\lceil \dfrac{N}{2} \right\rceil \right]$, the first $\dfrac{M}{2}$ rows of $\mathbf{W}_2$ are the first polarization direction of $\mathbf{W}_2$, the last $\dfrac{M}{2}$ rows of $\mathbf{W}_2$ are the second polarization direction of $\mathbf{W}_2$, and M is a quantity of rows of $\mathbf{W}_2$.

Optionally, that phases of a $\left( k + \left\lceil \dfrac{N}{2} \right\rceil \right)^{\text{th}}$ column vector of $\mathbf{W}_2$ in a first polarization direction of $\mathbf{W}_2$ are related to phases of a $k^{\text{th}}$ column vector of $\mathbf{W}_2$ in a first polarization direction of $\mathbf{W}_2$, and phases of the $\left( k + \left\lceil \dfrac{N}{2} \right\rceil \right)^{\text{th}}$ column vector of $\mathbf{W}_2$ in the second polarization direction of $\mathbf{W}_2$ are related to phases of the $k^{\text{th}}$ column vector of $\mathbf{W}_2$ in the second polarization direction of $\mathbf{W}_2$ specifically includes that

a phase of an element in a $y^{\text{th}}$ row in the first polarization direction of the $k^{\text{th}}$ column vector of $\mathbf{W}_2$ is rotated by an angle of $a_y$, to obtain a phase of an element in a $y^{\text{th}}$ row in the first polarization direction of the $\left( k + \left\lceil \dfrac{N}{2} \right\rceil \right)^{\text{th}}$ column vector of $\mathbf{W}_2$; and

a phase of an element in a $y^{\text{th}}$ row in the second polarization direction of the $k^{\text{th}}$ column vector of $\mathbf{W}_2$ is rotated by an angle of $b_y$, to obtain a phase of an element in a $y^{th}$ row in the second polarization direction of the $(k + \lceil \frac{N}{2} \rceil)^{th}$ column vector of $\mathbf{W}_2$, where

$a_y$ and $b_y$ meet $|a_y\text{-}b_y|\mathrm{mod}(2\pi) = \pi$, $(x)\mathrm{mod}(2\pi)$ indicates that a remainder is obtained by dividing $x$ by $2\pi$, a value range

$$y = 1, \ldots, \frac{M}{2}$$

of $a_y$ or $b_y$ is $[0, 2\pi)$, and .

Optionally, that phases of a $(k + \lceil \frac{N}{2} \rceil)^{th}$ column vector of $\mathbf{W}_2$ in a first polarization direction of $\mathbf{W}_2$ are

related to phases of a $k^{th}$ column vector of $\mathbf{W}_2$ in a second polarization direction of $\mathbf{W}_2$, and phases of the $(k + \lceil \frac{N}{2} \rceil)^{th}$ column vector of $\mathbf{W}_2$ in the second polarization direction of $\mathbf{W}_2$ are related to phases of the $k^{th}$ column vector of $\mathbf{W}_2$ in the first polarization direction of $\mathbf{W}_2$ specifically includes that

a phase of an element in a $y^{th}$ row in the first polarization direction of the $k^{th}$ column vector of $\mathbf{W}_2$ is conjugated and rotated by an angle of $a_y$, to obtain a phase of an element in a $y^{th}$ row in the second polarization direction of the

$(k + \lceil \frac{N}{2} \rceil)^{th}$ column vector of $\mathbf{W}_2$; and

a phase of an element in a $y^{th}$ row in the second polarization direction of the $k^{th}$ column vector of $\mathbf{W}_2$ is conjugated and

rotated by an angle of $b_y$, to obtain a phase of an element in a $y^{th}$ row in the first polarization direction of the $(k + \lceil \frac{N}{2} \rceil)^{th}$ column vector of $\mathbf{W}_2$, where

$a_y$ and $b_y$ meet $|a_y\text{-}b_y|\mathrm{mod}(2\pi) = \pi$, $(x)\mathrm{mod}(2\pi)$ indicates that a remainder is obtained by dividing $x$ by $2\pi$, a value range

$$y = 1, \ldots, \frac{M}{2}$$

of $a_y$ or $b_y$ is $[0, 2\pi)$, and .

The terminal device provided in the embodiments of this application may execute the foregoing method embodiment, and an implementation principle and technical effect are similar, which is not repeatedly described herein.

Methods or algorithm steps described with reference to the content disclosed in this application may be implemented by hardware, or may be implemented by a processor by executing a software instruction, or may be implemented by using a computer program product. The software instruction may include a corresponding software module. The software module may be located in a RAM memory, a flash memory, a ROM memory, an EPROM memory, an EEPROM memory, a register, a hard disk, a removable hard disk, a CD-ROM, or a storage medium of any other form well-known in the art. For example, a storage medium is coupled to a processor, so that the processor can read information from the storage medium and write the information into the storage medium. Certainly, the storage medium may alternatively be a component of the processor. The processor and the storage medium may be located in an ASIC. In addition, the ASIC may be located in user equipment. Certainly, the processor and the storage medium may exist in the user equipment as discrete components.

In the several embodiments provided in this application, it should be understood that the disclosed system, device, and method may be implemented in other manners without departing from the scope of this application. For example, the embodiments described above are merely examples. For example, division of the modules or units is merely logical function division, and there may be another division manner in actual implementation. For example, a plurality of units or components may be combined or integrated into another system, or some features may be ignored or not performed. The units described as separate parts may or may not be physically separate, and parts displayed as units may or may not be physical units, and may be located in one position, or may be distributed on a plurality of network units. Some or all of the modules may be selected based on an actual requirement to achieve the objectives of the solutions of the embodiments.

In addition, the schematic diagrams illustrating the system, device, method and different embodiments may be combined or integrated with other systems, modules, technologies, or methods. In addition, the displayed or discussed mutual couplings or direct couplings or communication connections may be implemented by using some interfaces. The indirect couplings or communication connections between the apparatuses or units may be implemented in electronic, mechanical, or another form.

**Claims**

1. A channel state information transmission method, comprising:

   receiving, by an access network device, channel state information CSI reported by a terminal device, wherein the CSI comprises a first precoding matrix indication PMI and a second PMI; and
   determining, by the access network device, a precoding matrix $\mathbf{W}$ based on the first PMI, the second PMI, and a preset codebook, wherein $\mathbf{W}$ meets $\mathbf{W} = \mathbf{W}_1 \times \mathbf{W}_2$, $\mathbf{W}_1$ corresponds to the first PMI, $\mathbf{W}_2$ corresponds to the second PMI, the second PMI indicates some column vectors of $\mathbf{W}_2$ and an amplitude association relationship between the some column vectors of $\mathbf{W}_2$ and remaining column vectors of $\mathbf{W}_2$, and a quantity of columns of $\mathbf{W}$ is greater than 2.

2. The method according to claim 1, wherein the amplitude association relationship between the some column vectors of $\mathbf{W}_2$ and the remaining column vectors of $\mathbf{W}_2$ specifically comprises that amplitudes of the first $\left\lceil \dfrac{N}{2} \right\rceil$ column vectors of $\mathbf{W}_2$ are related to amplitudes of the last $\left(N - \left\lceil \dfrac{N}{2} \right\rceil\right)$ column vectors of $\mathbf{W}_2$, and N is a quantity of columns of $\mathbf{W}_2$.

3. The method according to claim 2, wherein that amplitudes of the first $\left\lceil \dfrac{N}{2} \right\rceil$ column vectors of $\mathbf{W}_2$ are related to amplitudes of the last $\left(N - \left\lceil \dfrac{N}{2} \right\rceil\right)$ column vectors of $\mathbf{W}_2$ specifically comprises that

   amplitudes of a $\left(k + \left\lceil \dfrac{N}{2} \right\rceil\right)^{\text{th}}$ column vector of $\mathbf{W}_2$ in a first polarization direction of $\mathbf{W}_2$ are related to amplitudes of a $k^{\text{th}}$ column vector of $\mathbf{W}_2$ in a second polarization direction of $\mathbf{W}_2$, and amplitudes of the $\left(k + \left\lceil \dfrac{N}{2} \right\rceil\right)^{\text{th}}$ column vector of $\mathbf{W}_2$ in the second polarization direction of $\mathbf{W}_2$ are related to amplitudes of the $k^{\text{th}}$ column vector of $\mathbf{W}_2$ $\mathbf{W}_2$ in the first polarization direction of $\mathbf{W}_2$ ; and
   polarization directions of $\mathbf{W}_2$ comprise the first polarization direction and the second polarization direction, k is a positive integer in $\left[1, \left\lceil \dfrac{N}{2} \right\rceil\right]$, the first $\dfrac{M}{2}$ rows of $\mathbf{W}_2$ are the first polarization direction of $\mathbf{W}_2$, the last $\dfrac{M}{2}$ rows of $\mathbf{W}_2$ are the second polarization direction of $\mathbf{W}_2$, and M is a quantity of rows of $\mathbf{W}_2$.

4. The method according to claim 3, wherein that amplitudes of a $\left(k + \left\lceil \dfrac{N}{2} \right\rceil\right)^{\text{th}}$ column vector of $\mathbf{W}_2$ in a first

polarization direction of $\mathbf{W}_2$ are related to amplitudes of a $k^{th}$ column vector of $\mathbf{W}_2$ in a second polarization direction of $\mathbf{W}_2$ specifically comprises that

the amplitudes of the $(k + \lceil \frac{N}{2} \rceil)^{th}$ column vector of $\mathbf{W}_2$ in the first polarization direction of $\mathbf{W}_2$ are equal to the amplitudes of the $k^{th}$ column vector of $\mathbf{W}_2$ in the second polarization direction of $\mathbf{W}_2$, and a sequence of the amplitudes

of the $(k + \lceil \frac{N}{2} \rceil)^{th}$ column vector in the first polarization direction of $\mathbf{W}_2$ is the same as a sequence of the amplitudes of the $k^{th}$ column vector in the second polarization direction of $\mathbf{W}_2$; and

that amplitudes of the $(k + \lceil \frac{N}{2} \rceil)^{th}$ column vector of $\mathbf{W}_2$ in the second polarization direction of $\mathbf{W}_2$ are related to amplitudes of the $k^{th}$ column vector of $\mathbf{W}_2$ in the first polarization direction of $\mathbf{W}_2$ specifically comprises that

the amplitudes of the $(k + \lceil \frac{N}{2} \rceil)^{th}$ column vector of $\mathbf{W}_2$ in the second polarization direction of $\mathbf{W}_2$ are equal to the amplitudes of the $k^{th}$ column vector of $\mathbf{W}_2$ in the first polarization direction of $\mathbf{W}_2$, and a sequence of the amplitudes of the $(k + \lceil \frac{N}{2} \rceil)^{th}$ column vector in the second polarization direction of $\mathbf{W}_2$ is the same as a sequence of the amplitudes of the $k^{th}$ column vector in the first polarization direction of $\mathbf{W}_2$.

5. The method according to any one of claims 1 to 4, wherein the second PMI is further used to indicate a phase association relationship between the some column vectors of $\mathbf{W}_2$ and the remaining column vectors of $\mathbf{W}_2$.

6. The method according to claim 5, wherein the phase association relationship between the some column vectors of $\mathbf{W}_2$ and the remaining column vectors of $\mathbf{W}_2$ specifically comprises that

phases of the first $\lceil \frac{N}{2} \rceil$ column vectors of $\mathbf{W}_2$ are related to phases of the last $(N - \lceil \frac{N}{2} \rceil)$ column vectors of $\mathbf{W}_2$.

7. The method according to claim 6, wherein that phases of the first $\lceil \frac{N}{2} \rceil$ column vectors of $\mathbf{W}_2$ are related to phases

of the last $(N - \lceil \frac{N}{2} \rceil)$ column vectors of $\mathbf{W}_2$ specifically comprises that

phases of the $(k + \lceil \frac{N}{2} \rceil)^{th}$ column vector of $\mathbf{W}_2$ in the first polarization direction of $\mathbf{W}_2$ are related to phases of the $k^{th}$ column vector of $\mathbf{W}_2$ in the first polarization direction of $\mathbf{W}_2$, and phases of the $(k + \lceil \frac{N}{2} \rceil)^{th}$ column vector of $\mathbf{W}_2$ in the second polarization direction of $\mathbf{W}_2$ are related to phases of the $k^{th}$ column vector of $\mathbf{W}_2$ in the second polarization direction of $W_2$; or

phases of the $(k + \lceil \frac{N}{2} \rceil)^{th}$ column vector of $W_2$ in the first polarization direction of $W_2$ are related to phases of the k$^{th}$ column vector of $W_2$ in the second polarization direction of $W_2$, and phases of the $(k + \lceil \frac{N}{2} \rceil)^{th}$ column vector of $W_2$ in the second polarization direction of $W_2$ are related to phases of the k$^{th}$ column vector of $W_2$ in the first polarization direction of $W_2$; and

the polarization directions of $W_2$ comprise the first polarization direction and the second polarization direction, k is a positive integer in $[1, \lceil \frac{N}{2} \rceil]$, the first $\frac{M}{2}$ rows of $W_2$ are the first polarization direction of $W_2$, the last $\frac{M}{2}$ rows of $W_2$ are the second polarization direction of $W_2$, and M is a quantity of rows of $W_2$.

8. The method according to claim 7, wherein that phases of the $(k + \lceil \frac{N}{2} \rceil)^{th}$ column vector of $W_2$ in the first polarization direction of $W_2$ are related to phases of the k$^{th}$ column vector of $W_2$ in the first polarization direction of $W_2$, and phases of the $(k + \lceil \frac{N}{2} \rceil)^{th}$ column vector of $W_2$ in the second polarization direction of $W_2$ are related to phases of the k$^{th}$ column vector of $W_2$ in the second polarization direction of $W_2$ specifically comprises that

a phase of an element in a y$^{th}$ row in the first polarization direction of the k$^{th}$ column vector of $W_2$ is rotated by an angle of $a_y$, to obtain a phase of an element in a y$^{th}$ row in the first polarization direction of the $(k + \lceil \frac{N}{2} \rceil)^{th}$ column vector of $W_2$; and

a phase of an element in a y$^{th}$ row in the second polarization direction of the k$^{th}$ column vector of $W_2$ is rotated by an angle of $b_y$, to obtain a phase of an element in a y$^{th}$ row in the second polarization direction of the $(k + \lceil \frac{N}{2} \rceil)^{th}$ column vector of $W_2$, wherein

$a_y$ and $b_y$ meet $|a_y - b_y| \mod(2\pi) = \pi$, $(x) \mod(2\pi)$ indicates that a remainder is obtained by dividing $x$ by $2\pi$, a value range of $a_y$ or $b_y$ is $[0, 2\pi)$, and $y = 1, \dots, \frac{M}{2}$.

9. The method according to claim 7, wherein that phases of the $(k + \lceil \frac{N}{2} \rceil)^{th}$ column vector of $W_2$ in the first polarization direction of $W_2$ are related to phases of the k$^{th}$ column vector of $W_2$ in the second polarization direction of $W_2$, and phases of the $(k + \lceil \frac{N}{2} \rceil)^{th}$ column vector of $W_2$ in the second polarization direction of $W_2$ are related to phases of the k$^{th}$ column vector of $W_2$ in the first polarization direction of $W_2$ specifically comprises that

a phase of an element in a $y^{th}$ row in the first polarization direction of the $k^{th}$ column vector of $\mathbf{W}_2$ is conjugated and rotated by an angle of $a_y$, to obtain a phase of an element in a $y^{th}$ row in the second polarization direction of the $(k + \lceil \frac{N}{2} \rceil )^{th}$ column vector of $\mathbf{W}_2$ ; and

a phase of an element in a $y^{th}$ row in the second polarization direction of the $k^{th}$ column vector of $\mathbf{W}_2$ is conjugated and rotated by an angle of $b_y$, to obtain a phase of an element in a $y^{th}$ row in the first polarization direction of the $(k + \lceil \frac{N}{2} \rceil )^{th}$ column vector of $\mathbf{W}_2$, wherein

$a_y$ and $b_y$ meet $|a_y\text{-}b_y|\bmod(2\pi)=\pi$, $(x)\bmod(2\pi)$ indicates that a remainder is obtained by dividing $x$ by $2\pi$, a value range of $a_y$ or $b_y$ is $[0, 2\pi)$, and $y = 1,\ldots,\dfrac{M}{2}$ .

10. A channel state information transmission method, comprising:

determining, by a terminal device, a precoding matrix $\mathbf{W}$ based on a reference signal delivered by an access network device, wherein $\mathbf{W}$ meets $\mathbf{W} = \mathbf{W}_1 \times \mathbf{W}_2$ ; and

sending, by the terminal device, channel state information CSI to the access network device, wherein the CSI comprises a first precoding matrix indication PMI and a second PMI, $\mathbf{W}_1$ corresponds to the first PMI, $\mathbf{W}_2$ corresponds to the second PMI, the second PMI indicates some column vectors of $\mathbf{W}_2$ and an amplitude association relationship between the some column vectors of $\mathbf{W}_2$ and remaining column vectors of $\mathbf{W}_2$, and a quantity of columns of $\mathbf{W}$ is greater than 2.

11. The method according to claim 10, wherein the amplitude association relationship between the some column vectors of $\mathbf{W}_2$ and the remaining column vectors of $\mathbf{W}_2$ specifically comprises that

amplitudes of the first $\lceil \frac{N}{2} \rceil$ column vectors of $\mathbf{W}_2$ are related to amplitudes of the last $(N - \lceil \frac{N}{2} \rceil )$ column vectors of $\mathbf{W}_2$, and N is a quantity of columns of $\mathbf{W}_2$.

12. The method according to claim 11, wherein that amplitudes of the first $\lceil \frac{N}{2} \rceil$ column vectors of $\mathbf{W}_2$ are related to amplitudes of the last $(N - \lceil \frac{N}{2} \rceil )$ column vectors of $\mathbf{W}_2$ specifically comprises that

amplitudes of a $(k + \lceil \frac{N}{2} \rceil )^{th}$ column vector of $\mathbf{W}_2$ in a first polarization direction of $\mathbf{W}_2$ are related to amplitudes of a $k^{th}$ column vector of $\mathbf{W}_2$ in a second polarization direction of $\mathbf{W}_2$, and amplitudes of the $(k + \lceil \frac{N}{2} \rceil )^{th}$ column vector of $\mathbf{W}_2$ in the second polarization direction of $\mathbf{W}_2$ are related to amplitudes of the $k^{th}$ column vector of $\mathbf{W}_2$ in the first polarization direction of $\mathbf{W}_2$; and

polarization directions of $\mathbf{W}_2$ comprise the first polarization direction and the second polarization direction, k is a positive integer in $\left[1, \left\lceil \dfrac{N}{2} \right\rceil\right]$, the first $\dfrac{M}{2}$ rows of $\mathbf{W}_2$ are the first polarization direction of $\mathbf{W}_2$, the last $\dfrac{M}{2}$ rows of $\mathbf{W}_2$ are the second polarization direction of $\mathbf{W}_2$, and M is a quantity of rows of $\mathbf{W}_2$.

13. The method according to claim 12, wherein that amplitudes of a $\left(k + \left\lceil \dfrac{N}{2} \right\rceil\right)^{\text{th}}$ column vector of $\mathbf{W}_2$ in a first polarization direction of $\mathbf{W}_2$ are related to amplitudes of a $k^{\text{th}}$ column vector of $\mathbf{W}_2$ in a second polarization direction of $\mathbf{W}_2$ specifically comprises that

the amplitudes of the $\left(k + \left\lceil \dfrac{N}{2} \right\rceil\right)^{\text{th}}$ column vector of $\mathbf{W}_2$ in the first polarization direction of $\mathbf{W}_2$ are equal to the amplitudes of the $k^{\text{th}}$ column vector of $\mathbf{W}_2$ in the second polarization direction of $\mathbf{W}_2$, and a sequence of the amplitudes of the $\left(k + \left\lceil \dfrac{N}{2} \right\rceil\right)^{\text{th}}$ column vector in the first polarization direction of $\mathbf{W}_2$ is the same as a sequence of the amplitudes of the $k^{\text{th}}$ column vector in the second polarization direction of $\mathbf{W}_2$; and

that amplitudes of the $\left(k + \left\lceil \dfrac{N}{2} \right\rceil\right)^{\text{th}}$ column vector of $\mathbf{W}_2$ in the second polarization direction of $\mathbf{W}_2$ are related to amplitudes of the $k^{\text{th}}$ column vector of $\mathbf{W}_2$ in the first polarization direction of $\mathbf{W}_2$ specifically comprises that

the amplitudes of the $\left(k + \left\lceil \dfrac{N}{2} \right\rceil\right)^{\text{th}}$ column vector of $\mathbf{W}_2$ in the second polarization direction of $\mathbf{W}_2$ are equal to the amplitudes of the $k^{\text{th}}$ column vector of $\mathbf{W}_2$ in the first polarization direction of $\mathbf{W}_2$, and a sequence of the amplitudes of the $\left(k + \left\lceil \dfrac{N}{2} \right\rceil\right)^{\text{th}}$ column vector in the second polarization direction of $\mathbf{W}_2$ is the same as a sequence of the amplitudes of the $k^{\text{th}}$ column vector in the first polarization direction of $\mathbf{W}_2$.

14. The method according to any one of claims 10 to 13, wherein the second PMI is further used to indicate a phase association relationship between the some column vectors of $\mathbf{W}_2$ and the remaining column vectors of $\mathbf{W}_2$.

15. The method according to claim 14, wherein the phase association relationship between the some column vectors of $\mathbf{W}_2$ and the remaining column vectors of $\mathbf{W}_2$ $\mathbf{W}_2$ specifically comprises that

phases of the first $\left\lceil \dfrac{N}{2} \right\rceil$ column vectors of $\mathbf{W}_2$ are related to phases of the last $\left(N - \left\lceil \dfrac{N}{2} \right\rceil\right)$ column vectors of $\mathbf{W}_2$.

16. The method according to claim 15, wherein that phases of the first $\left\lceil \dfrac{N}{2} \right\rceil$ column vectors of $\mathbf{W}_2$ are related to phases of the last $\left(N - \left\lceil \dfrac{N}{2} \right\rceil\right)$ column vectors of $\mathbf{W}_2$ specifically comprises that

phases of the $(k + \lceil \frac{N}{2} \rceil)^{th}$ column vector of $\mathbf{W}_2$ in the first polarization direction of $\mathbf{W}_2$ are related to phases of the $k^{th}$ column vector of $\mathbf{W}_2$ in the first polarization direction of $\mathbf{W}_2$, and phases of the $(k + \lceil \frac{N}{2} \rceil)^{th}$ column vector of $\mathbf{W}_2$ in the second polarization direction of $\mathbf{W}_2$ are related to phases of the $k^{th}$ column vector of $\mathbf{W}_2$ in the second polarization direction of $\mathbf{W}_2$; or

phases of the $(k + \lceil \frac{N}{2} \rceil)^{th}$ column vector of $\mathbf{W}_2$ in the first polarization direction of $\mathbf{W}_2$ are related to phases of the $k^{th}$ column vector of $\mathbf{W}_2$ in the second polarization direction of $\mathbf{W}_2$, and phases of the $(k + \lceil \frac{N}{2} \rceil)^{th}$ column vector of $\mathbf{W}_2$ in the second polarization direction of $\mathbf{W}_2$ are related to phases of the $k^{th}$ column vector of $\mathbf{W}_2$ in the first polarization direction of $\mathbf{W}_2$; and

polarization directions of $\mathbf{W}_2$ comprise the first polarization direction and the second polarization direction, k is a positive integer in $[1, \lceil \frac{N}{2} \rceil]$, the first $\frac{M}{2}$ rows of $\mathbf{W}_2$ are the first polarization direction of $\mathbf{W}_2$, the last $\frac{M}{2}$ rows of $\mathbf{W}_2$ are the second polarization direction of $\mathbf{W}_2$, and M is a quantity of rows of $\mathbf{W}_2$.

17. The method according to claim 16, wherein that phases of the $(k + \lceil \frac{N}{2} \rceil)^{th}$ column vector of $\mathbf{W}_2$ in the first polarization direction of $\mathbf{W}_2$ are related to phases of the $k^{th}$ column vector of $\mathbf{W}_2$ in the first polarization direction of $\mathbf{W}_2$, and phases of the $(k + \lceil \frac{N}{2} \rceil)^{th}$ column vector of $\mathbf{W}_2$ in the second polarization direction of $\mathbf{W}_2$ are related to phases of the $k^{th}$ column vector of $\mathbf{W}_2$ in the second polarization direction of $\mathbf{W}_2$ specifically comprises that

a phase of an element in a $y^{th}$ row in the first polarization direction of the $k^{th}$ column vector of $\mathbf{W}_2$ is rotated by an angle of $a_y$, to obtain a phase of an element in a $y^{th}$ row in the first polarization direction of the $(k + \lceil \frac{N}{2} \rceil)^{th}$ column vector of $\mathbf{W}_2$; and

a phase of an element in a $y^{th}$ row in the second polarization direction of the $k^{th}$ column vector of $\mathbf{W}_2$ is rotated by an angle of $b_y$, to obtain a phase of an element in a $y^{th}$ row in the second polarization direction of the $(k + \lceil \frac{N}{2} \rceil)^{th}$ column vector of $\mathbf{W}_2$, wherein

$a_y$ and $b_y$ meet $|a_y - b_y| \bmod(2\pi) = \pi$, $(x)\bmod(2\pi)$ indicates that a remainder is obtained by dividing $x$ by $2\pi$, a value range of $a_y$ or $b_y$ is $[0, 2\pi)$, and $y = 1, \ldots, \frac{M}{2}$.

18.

The method according to claim 16, wherein that phases of the $(k + \lceil \frac{N}{2} \rceil)^{th}$ column vector of $\mathbf{W}_2$ in the first polarization direction of $\mathbf{W}_2$ are related to phases of the $k^{th}$ column vector of $\mathbf{W}_2$ in the second polarization direction of $\mathbf{W}_2$, and

phases of the $(k + \lceil \frac{N}{2} \rceil)^{th}$ column vector of $\mathbf{W}_2$ in the second polarization direction of $\mathbf{W}_2$ are related to phases of the $k^{th}$ column vector of $\mathbf{W}_2$ in the first polarization direction of $\mathbf{W}_2$ specifically comprises that

a phase of an element in a $y^{th}$ row in the first polarization direction of the $k^{th}$ column vector of $\mathbf{W}_2$ is conjugated and rotated by an angle of $a_y$, to obtain a phase of an element in a $y^{th}$ row in the second polarization direction of the

$(k + \lceil \frac{N}{2} \rceil)^{th}$ column vector of $\mathbf{W}_2$; and

a phase of an element in a $y^{th}$ row in the second polarization direction of the $k^{th}$ column vector of $\mathbf{W}_2$ is conjugated and rotated by an angle of $b_y$, to obtain a phase of an element in a $y^{th}$ row in the first polarization direction of the

$(k + \lceil \frac{N}{2} \rceil)^{th}$ column vector of $\mathbf{W}_2$, wherein

$a_y$ and $b_y$ meet $|a_y - b_y| \mod(2\pi) = \pi$, $(x)\mod(2\pi)$ indicates that a remainder is obtained by dividing $x$ by $2\pi$, a value range of $a_y$ or $b_y$ is $[0, 2\pi)$, and $y = 1, \ldots, \frac{M}{2}$.

**19.** An access network device, comprising:

a receiving module, configured to receive channel state information CSI reported by a terminal device, wherein the CSI comprises a first precoding matrix indication PMI and a second PMI; and
a determining module, configured to determine a precoding matrix $\mathbf{W}$ based on the first PMI, the second PMI, and a preset codebook, wherein $\mathbf{W}$ meets $\mathbf{W} = \mathbf{W}_1 \times \mathbf{W}_2$, $\mathbf{W}_1$ corresponds to the first PMI, $\mathbf{W}_2$ corresponds to the second PMI, the second PMI indicates some column vectors of $\mathbf{W}_2$ and an amplitude association relationship between the some column vectors of $\mathbf{W}_2$ and remaining column vectors of $\mathbf{W}_2$, and a quantity of columns of $\mathbf{W}$ is greater than 2.

**20.** The access network device according to claim 19, wherein the amplitude association relationship between the some column vectors of $\mathbf{W}_2$ and the remaining column vectors of $\mathbf{W}_2$ specifically comprises that

amplitudes of the first $\lceil \frac{N}{2} \rceil$ column vectors of $\mathbf{W}_2$ are related to amplitudes of the last $(N - \lceil \frac{N}{2} \rceil)$ column vectors of $\mathbf{W}_2$, and N is a quantity of columns of $\mathbf{W}_2$.

**21.** The access network device according to claim 20, wherein that amplitudes of the first $\lceil \frac{N}{2} \rceil$ column vectors of $\mathbf{W}_2$ are related to amplitudes of the last $(N - \lceil \frac{N}{2} \rceil)$ column vectors of $\mathbf{W}_2$ specifically comprises that

amplitudes of a $(k + \lceil \frac{N}{2} \rceil)^{th}$ column vector of $\mathbf{W}_2$ in a first polarization direction of $\mathbf{W}_2$ are related to amplitudes of a k$^{th}$ column vector of $\mathbf{W}_2$ in a second polarization direction of $\mathbf{W}_2$, and amplitudes of the $(k + \lceil \frac{N}{2} \rceil)^{th}$ column vector of $\mathbf{W}_2$ in the second polarization direction of $\mathbf{W}_2$ are related to amplitudes of the k$^{th}$ column vector of $\mathbf{W}_2$ in the first polarization direction of $\mathbf{W}_2$; and

polarization directions of $\mathbf{W}_2$ comprise the first polarization direction and the second polarization direction, k is a positive integer in $[1, \lceil \frac{N}{2} \rceil]$, the first $\frac{M}{2}$ rows of $\mathbf{W}_2$ are the first polarization direction of $\mathbf{W}_2$, the last $\frac{M}{2}$ rows of $\mathbf{W}_2$ are the second polarization direction of $\mathbf{W}_2$, and M is a quantity of rows of $\mathbf{W}_2$.

22. The access network device according to claim 21, wherein that amplitudes of a $(k + \lceil \frac{N}{2} \rceil)^{th}$ column vector of $\mathbf{W}_2$ in a first polarization direction of $\mathbf{W}_2$ are related to amplitudes of a k$^{th}$ column vector of $\mathbf{W}_2$ in a second polarization direction of $\mathbf{W}_2$ specifically comprises that

the amplitudes of the $(k + \lceil \frac{N}{2} \rceil)^{th}$ column vector of $\mathbf{W}_2$ in the first polarization direction of $\mathbf{W}_2$ are equal to the amplitudes of the k$^{th}$ column vector of $\mathbf{W}_2$ in the second polarization direction of $\mathbf{W}_2$, and a sequence of the amplitudes of the $(k + \lceil \frac{N}{2} \rceil)^{th}$ column vector in the first polarization direction of $\mathbf{W}_2$ is the same as a sequence of the amplitudes of the k$^{th}$ column vector in the second polarization direction of $\mathbf{W}_2$; and

that amplitudes of the $(k + \lceil \frac{N}{2} \rceil)^{th}$ column vector of $\mathbf{W}_2$ in the second polarization direction of $\mathbf{W}_2$ are related to amplitudes of the k$^{th}$ column vector of $\mathbf{W}_2$ in the first polarization direction of $\mathbf{W}_2$ specifically comprises that

the amplitudes of the $(k + \lceil \frac{N}{2} \rceil)^{th}$ column vector of $\mathbf{W}_2$ in the second polarization direction of $\mathbf{W}_2$ are equal to the amplitudes of the k$^{th}$ column vector of $\mathbf{W}_2$ in the first polarization direction of $\mathbf{W}_2$, and a sequence of the amplitudes of the $(k + \lceil \frac{N}{2} \rceil)^{th}$ column vector in the second polarization direction of $\mathbf{W}_2$ is the same as a sequence of the amplitudes of the k$^{th}$ column vector in the first polarization direction of $\mathbf{W}_2$.

23. The access network device according to any one of claims 19 to 22, wherein the second PMI is further used to indicate a phase association relationship between the some column vectors of $\mathbf{W}_2$ and the remaining column vectors of $\mathbf{W}_2$.

24. The access network device according to claim 23, wherein the phase association relationship between the some column vectors of $\mathbf{W}_2$ and the remaining column vectors of $\mathbf{W}_2$ specifically comprises that

phases of the first $\left\lceil \dfrac{N}{2} \right\rceil$ column vectors of $\mathbf{W}_2$ are related to phases of the last $\left(N - \left\lceil \dfrac{N}{2} \right\rceil\right)$ column vectors of $\mathbf{W}_2$.

25. The access network device according to claim 24, wherein that phases of the first $\left\lceil \dfrac{N}{2} \right\rceil$ column vectors of $\mathbf{W}_2$ are related to phases of the last $\left(N - \left\lceil \dfrac{N}{2} \right\rceil\right)$ column vectors of $\mathbf{W}_2$ specifically comprises that

phases of the $\left(k + \left\lceil \dfrac{N}{2} \right\rceil\right)^{\text{th}}$ column vector of $\mathbf{W}_2$ in the first polarization direction of $\mathbf{W}_2$ are related to phases of the $k^{\text{th}}$ column vector of $\mathbf{W}_2$ in the first polarization direction of $\mathbf{W}_2$, and phases of the $\left(k + \left\lceil \dfrac{N}{2} \right\rceil\right)^{\text{th}}$ column vector of $\mathbf{W}_2$ in the second polarization direction of $\mathbf{W}_2$ are related to phases of the $k^{\text{th}}$ column vector of $\mathbf{W}_2$ in the second polarization direction of $\mathbf{W}_2$; or

phases of the $\left(k + \left\lceil \dfrac{N}{2} \right\rceil\right)^{\text{th}}$ column vector of $\mathbf{W}_2$ in the first polarization direction of $\mathbf{W}_2$ are related to phases of the $k^{\text{th}}$ column vector of $\mathbf{W}_2$ in the second polarization direction of $\mathbf{W}_2$, and phases of the $\left(k + \left\lceil \dfrac{N}{2} \right\rceil\right)^{\text{th}}$ column vector of $\mathbf{W}_2$ in the second polarization direction of $\mathbf{W}_2$ are related to phases of the $k^{\text{th}}$ column vector of $\mathbf{W}_2$ in the first polarization direction of $\mathbf{W}_2$; and

polarization directions of $\mathbf{W}_2$ comprise the first polarization direction and the second polarization direction, k is a positive integer in $\left[1, \left\lceil \dfrac{N}{2} \right\rceil\right]$, the first $\dfrac{M}{2}$ rows of $\mathbf{W}_2$ are the first polarization direction of $\mathbf{W}_2$, the last $\dfrac{M}{2}$ rows of $\mathbf{W}_2$ are the second polarization direction of $\mathbf{W}_2$, and M is a quantity of rows of $\mathbf{W}_2$.

26. The access network device according to claim 25, wherein that phases of the $\left(k + \left\lceil \dfrac{N}{2} \right\rceil\right)^{\text{th}}$ column vector of $\mathbf{W}_2$ in the first polarization direction of $\mathbf{W}_2$ are related to phases of the $k^{\text{th}}$ column vector of $\mathbf{W}_2$ in the first polarization direction of $\mathbf{W}_2$, and phases of the $\left(k + \left\lceil \dfrac{N}{2} \right\rceil\right)^{\text{th}}$ column vector of $\mathbf{W}_2$ in the second polarization direction of $\mathbf{W}_2$ are related to phases of the $k^{\text{th}}$ column vector of $\mathbf{W}_2$ in the second polarization direction of $\mathbf{W}_2$ specifically comprises that

a phase of an element in a $y^{\text{th}}$ row in the first polarization direction of the $k^{\text{th}}$ column vector of $\mathbf{W}_2$ is rotated by an angle of $a_y$, to obtain a phase of an element in a $y^{\text{th}}$ row in the first polarization direction of the $\left(k + \left\lceil \dfrac{N}{2} \right\rceil\right)^{\text{th}}$

column vector of $\mathbf{W}_2$; and

a phase of an element in a $y^{th}$ row in the second polarization direction of the $k^{th}$ column vector of $\mathbf{W}_2$ is rotated by

an angle of $b_y$, to obtain a phase of an element in a $y^{th}$ row in the second polarization direction of the $(k + \lceil \frac{N}{2} \rceil)^{th}$ column vector of $\mathbf{W}_2$, wherein

$a_y$ and $b_y$ meet $|a_y - b_y| \bmod (2\pi) = \pi$, $(x) \bmod (2\pi)$ indicates that a remainder is obtained by dividing $x$ by $2\pi$, a value

range of $a_y$ or $b_y$ is $[0, 2\pi)$, and $y = 1, \ldots, \dfrac{M}{2}$.

27. The access network device according to claim 25, wherein that phases of the $(k + \lceil \frac{N}{2} \rceil)^{th}$ column vector of $\mathbf{W}_2$ in the first polarization direction of $\mathbf{W}_2$ are related to phases of the $k^{th}$ column vector of $\mathbf{W}_2$ in the second polarization direction of $\mathbf{W}_2$, and phases of the $(k + \lceil \frac{N}{2} \rceil)^{th}$ column vector of $\mathbf{W}_2$ in the second polarization direction of $\mathbf{W}_2$ are related to phases of the $k^{th}$ column vector of $\mathbf{W}_2$ in the first polarization direction of $\mathbf{W}_2$ specifically comprises that

a phase of an element in a $y^{th}$ row in the first polarization direction of the $k^{th}$ column vector of $\mathbf{W}_2$ is conjugated and rotated by an angle of $a_y$, to obtain a phase of an element in a $y^{th}$ row in the second polarization direction of the $(k + \lceil \frac{N}{2} \rceil)^{th}$ column vector of $\mathbf{W}_2$; and

a phase of an element in a $y^{th}$ row in the second polarization direction of the $k^{th}$ column vector of $\mathbf{W}_2$ is conjugated and rotated by an angle of $b_y$, to obtain a phase of an element in a $y^{th}$ row in the first polarization direction of the $(k + \lceil \frac{N}{2} \rceil)^{th}$ column vector of $\mathbf{W}_2$, wherein

$a_y$ and $b_y$ meet $|a_y - b_y| \bmod (2\pi) = \pi$, $(x) \bmod (2\pi)$ indicates that a remainder is obtained by dividing $x$ by $2\pi$, a value

range of $a_y$ or $b_y$ is $[0, 2\pi)$, and $y = 1, \ldots, \dfrac{M}{2}$.

28. A terminal device, comprising:

   a determining module, configured to determine a precoding matrix $\mathbf{W}$ based on a reference signal delivered by an access network device, wherein $\mathbf{W}$ meets $\mathbf{W} = \mathbf{W}_1 \times \mathbf{W}_2$; and
   a sending module, configured to send channel state information CSI to the access network device, wherein the CSI comprises a first precoding matrix indication PMI and a second PMI, $\mathbf{W}_1$ corresponds to the first PMI, $\mathbf{W}_2$ corresponds to the second PMI, the second PMI indicates some column vectors of $\mathbf{W}_2$ and an amplitude association relationship between the some column vectors of $\mathbf{W}_2$ and remaining column vectors of $\mathbf{W}_2$, and a quantity of columns of $\mathbf{W}$ is greater than 2.

29. The terminal device according to claim 28, wherein the amplitude association relationship between the some column vectors of $\mathbf{W}_2$ and the remaining column vectors of $\mathbf{W}_2$ specifically comprises that

amplitudes of the first $\lceil \frac{N}{2} \rceil$ column vectors of $\mathbf{W}_2$ are related to amplitudes of the last $(N - \lceil \frac{N}{2} \rceil)$ column

vectors of $\mathbf{W}_2$, and N is a quantity of columns of $\mathbf{W}_2$.

**30.** The terminal device according to claim 29, wherein that amplitudes of the first $\left\lceil \dfrac{N}{2} \right\rceil$ column vectors of $\mathbf{W}_2$ are related to amplitudes of the last $\left( \mathrm{N} - \left\lceil \dfrac{N}{2} \right\rceil \right)$ column vectors of $\mathbf{W}_2$ specifically comprises that

amplitudes of a $\left( \mathrm{k} + \left\lceil \dfrac{N}{2} \right\rceil \right)^{\mathrm{th}}$ column vector of $\mathbf{W}_2$ in a first polarization direction of $\mathbf{W}_2$ are related to amplitudes of a $\mathrm{k}^{\mathrm{th}}$ column vector of $\mathbf{W}_2$ in a second polarization direction of $\mathbf{W}_2$, and amplitudes of the $\left( \mathrm{k} + \left\lceil \dfrac{N}{2} \right\rceil \right)^{\mathrm{th}}$ column vector of $\mathbf{W}_2$ in the second polarization direction of $\mathbf{W}_2$ are related to amplitudes of the $\mathrm{k}^{\mathrm{th}}$ column vector of $\mathbf{W}_2$ in the first polarization direction of $\mathbf{W}_2$; and

polarization directions of $\mathbf{W}_2$ comprise the first polarization direction and the second polarization direction, k is a positive integer in $\left[ 1, \left\lceil \dfrac{N}{2} \right\rceil \right]$, the first $\dfrac{M}{2}$ rows of $\mathbf{W}_2$ are the first polarization direction of $\mathbf{W}_2$, the last $\dfrac{M}{2}$ rows of $\mathbf{W}_2$ are the second polarization direction of $\mathbf{W}_2$, and M is a quantity of rows of $\mathbf{W}_2$.

**31.** The terminal device according to claim 30, wherein that amplitudes of a $\left( \mathrm{k} + \left\lceil \dfrac{N}{2} \right\rceil \right)^{\mathrm{th}}$ column vector of $\mathbf{W}_2$ in a first polarization direction of $\mathbf{W}_2$ are related to amplitudes of a $\mathrm{k}^{\mathrm{th}}$ column vector of $\mathbf{W}_2$ in a second polarization direction of $\mathbf{W}_2$ specifically comprises that

the amplitudes of the $\left( \mathrm{k} + \left\lceil \dfrac{N}{2} \right\rceil \right)^{\mathrm{th}}$ column vector of $\mathbf{W}_2$ in the first polarization direction of $\mathbf{W}_2$ are equal to the amplitudes of the $\mathrm{k}^{\mathrm{th}}$ column vector of $\mathbf{W}_2$ in the second polarization direction of $\mathbf{W}_2$, and a sequence of the amplitudes of the $\left( \mathrm{k} + \left\lceil \dfrac{N}{2} \right\rceil \right)^{\mathrm{th}}$ column vector in the first polarization direction of $\mathbf{W}_2$ is the same as a sequence of the amplitudes of the $\mathrm{k}^{\mathrm{th}}$ column vector in the second polarization direction of $\mathbf{W}_2$; and

that amplitudes of the $\left( \mathrm{k} + \left\lceil \dfrac{N}{2} \right\rceil \right)^{\mathrm{th}}$ column vector of $\mathbf{W}_2$ in the second polarization direction of $\mathbf{W}_2$ are related to amplitudes of the $\mathrm{k}^{\mathrm{th}}$ column vector of $\mathbf{W}_2$ in the first polarization direction of $\mathbf{W}_2$ specifically comprises that

the amplitudes of the $\left( \mathrm{k} + \left\lceil \dfrac{N}{2} \right\rceil \right)^{\mathrm{th}}$ column vector of $\mathbf{W}_2$ in the second polarization direction of $\mathbf{W}_2$ are equal to the amplitudes of the $\mathrm{k}^{\mathrm{th}}$ column vector of $\mathbf{W}_2$ in the first polarization direction of $\mathbf{W}_2$, and a sequence of the amplitudes of the $\left( \mathrm{k} + \left\lceil \dfrac{N}{2} \right\rceil \right)^{\mathrm{th}}$ column vector in the second polarization direction of $\mathbf{W}_2$ is the same as a sequence of the amplitudes of the k$^{th}$ column vector in the first polarization direction of $\mathbf{W}_2$.

32. The terminal device according to any one of claims 28 to 31, wherein the second PMI is further used to indicate a phase association relationship between the some column vectors of $\mathbf{W}_2$ and the remaining column vectors of $\mathbf{W}_2$.

33. The terminal device according to claim 32, wherein the phase association relationship between the some column vectors of $\mathbf{W}_2$ and the remaining column vectors of $\mathbf{W}_2$ specifically comprises that

phases of the first $\left\lceil \dfrac{N}{2} \right\rceil$ column vectors of $\mathbf{W}_2$ are related to phases of the last $\left( N - \left\lceil \dfrac{N}{2} \right\rceil \right)$ column vectors of $\mathbf{W}_2$.

34. The terminal device according to claim 33, wherein that phases of the first $\left\lceil \dfrac{N}{2} \right\rceil$ column vectors of $\mathbf{W}_2$ are related to phases of the last $\left( N - \left\lceil \dfrac{N}{2} \right\rceil \right)$ column vectors of $\mathbf{W}_2$ specifically comprises that

phases of the $\left( k + \left\lceil \dfrac{N}{2} \right\rceil \right)^{th}$ column vector of $\mathbf{W}_2$ in the first polarization direction of $\mathbf{W}_2$ are related to phases of the k$^{th}$ column vector of $\mathbf{W}_2$ in the first polarization direction of $\mathbf{W}_2$, and phases of the $\left( k + \left\lceil \dfrac{N}{2} \right\rceil \right)^{th}$ column vector of $\mathbf{W}_2$ in the second polarization direction of $\mathbf{W}_2$ are related to phases of the k$^{th}$ column vector of $\mathbf{W}_2$ in the second polarization direction of $\mathbf{W}_2$; or

phases of the $\left( k + \left\lceil \dfrac{N}{2} \right\rceil \right)^{th}$ column vector of $\mathbf{W}_2$ in the first polarization direction of $\mathbf{W}_2$ are related to phases of the k$^{th}$ column vector of $\mathbf{W}_2$ in the second polarization direction of $\mathbf{W}_2$, and phases of the $\left( k + \left\lceil \dfrac{N}{2} \right\rceil \right)^{th}$ column vector of $\mathbf{W}_2$ in the second polarization direction of $\mathbf{W}_2$ are related to phases of the k$^{th}$ column vector of $\mathbf{W}_2$ in the first polarization direction of $\mathbf{W}_2$; and

polarization directions of $\mathbf{W}_2$ comprise the first polarization direction and the second polarization direction, k is a positive integer in $\left[ 1, \left\lceil \dfrac{N}{2} \right\rceil \right]$, the first $\dfrac{M}{2}$ rows of $\mathbf{W}_2$ are the first polarization direction of $\mathbf{W}_2$, the last $\dfrac{M}{2}$ rows of $\mathbf{W}_2$ are the second polarization direction of $\mathbf{W}_2$, and M is a quantity of rows of $\mathbf{W}_2$.

35. The terminal device according to claim 34, wherein that phases of the $\left( k + \left\lceil \dfrac{N}{2} \right\rceil \right)^{th}$ column vector of $\mathbf{W}_2$ in the first polarization direction of $\mathbf{W}_2$ are related to phases of the k$^{th}$ column vector of $\mathbf{W}_2$ $\mathbf{W}_2$ in the first polarization direction of $\mathbf{W}_2$, and phases of the $\left( k + \left\lceil \dfrac{N}{2} \right\rceil \right)^{th}$ column vector of $\mathbf{W}_2$ in the second polarization direction of $\mathbf{W}_2$ are related to phases of the k$^{th}$ column vector of $\mathbf{W}_2$ in the second polarization direction of $\mathbf{W}_2$ specifically comprises

that

a phase of an element in a $y^{th}$ row in the first polarization direction of the $k^{th}$ column vector of $\mathbf{W}_2$ is rotated by an angle of $a_y$, to obtain a phase of an element in a $y^{th}$ row in the first polarization direction of the $(k + \lceil \frac{N}{2} \rceil)^{th}$ column vector of $\mathbf{W}_2$; and

a phase of an element in a $y^{th}$ row in the second polarization direction of the $k^{th}$ column vector of $\mathbf{W}_2$ is rotated by

an angle of $b_y$, to obtain a phase of an element in a $y^{th}$ row in the second polarization direction of the $(k + \lceil \frac{N}{2} \rceil)^{th}$ column vector of $\mathbf{W}_2$, wherein

$a_y$ and $b_y$ meet $|a_y\text{-}b_y|\text{mod}(2\pi)=\pi$, $(x)\text{mod}(2\pi)$ indicates that a remainder is obtained by dividing $x$ by $2\pi$, a value

$$y = 1, \ldots, \frac{M}{2}$$

range of $a_y$ or $b_y$ is $[0, 2\pi)$, and .

36. The terminal device according to claim 34, wherein that phases of the $(k + \lceil \frac{N}{2} \rceil)^{th}$ column vector of $\mathbf{W}_2$ in the first polarization direction of $\mathbf{W}_2$ are related to phases of the $k^{th}$ column vector of $\mathbf{W}_2$ in the second polarization

direction of $\mathbf{W}_2$, and phases of the $(k + \lceil \frac{N}{2} \rceil)^{th}$ column vector of $\mathbf{W}_2$ in the second polarization direction of $\mathbf{W}_2$ are related to phases of the $k^{th}$ column vector of $\mathbf{W}_2$ in the first polarization direction of $\mathbf{W}_2$ specifically comprises that

a phase of an element in a $y^{th}$ row in the first polarization direction of the $k^{th}$ column vector of $\mathbf{W}_2$ is conjugated and rotated by an angle of $a_y$, to obtain a phase of an element in a $y^{th}$ row in the second polarization direction of the

$(k + \lceil \frac{N}{2} \rceil)^{th}$ column vector of $\mathbf{W}_2$; and

a phase of an element in a $y^{th}$ row in the second polarization direction of the $k^{th}$ column vector of $\mathbf{W}_2$ is conjugated and rotated by an angle of $b_y$, to obtain a phase of an element in a $y^{th}$ row in the first polarization direction of the

$(k + \lceil \frac{N}{2} \rceil)^{th}$ column vector of $\mathbf{W}_2$, wherein

$a_y$ and $b_y$ meet $|a_y\text{-}b_y|\text{mod}(2\pi)=\pi$, $(x)\text{mod}(2\pi)$ indicates that a remainder is obtained by dividing $x$ by $2\pi$, a value

$$y = 1, \ldots, \frac{M}{2}$$

range of $a_y$ or $b_y$ is $[0, 2\pi)$, and .

FIG. 1

S101. The terminal device determines a precoding matrix $\mathbf{W}$ based on a reference signal delivered by the access network device, where $\mathbf{W}$ meets $\mathbf{W} = \mathbf{W}_1 \times \mathbf{W}_2$

S102. The terminal device sends CSI to the access network device, where the CSI includes a first PMI and a second PMI, $\mathbf{W}_1$ corresponds to the first PMI, $\mathbf{W}_2$ corresponds to the second PMI, the second PMI indicates some column vectors of $\mathbf{W}_2$ and an amplitude association relationship between the some column vectors of $\mathbf{W}_2$ and remaining column vectors of $\mathbf{W}_2$, and a quantity of columns of $\mathbf{W}$ is greater than 2

S103. The access network device receives the CSI reported by the terminal device

S104. The access network device determines the precoding matrix $\mathbf{W}$ based on the first PMI, the second PMI, and a preset codebook

FIG. 2

11                                    12

| Receiving module | Determining module |

Access network device

FIG. 3

21                                    22

| Determining module | Sending module |

Terminal device

FIG. 4

Access network device

Receiver　31

Memory　33

Processor　32

FIG. 5

Terminal device

Receiver　40

Transmitter　41

Memory　43

Processor　42

FIG. 6

## INTERNATIONAL SEARCH REPORT

| International application No. |
| --- |
| **PCT/CN2018/089391** |

**A. CLASSIFICATION OF SUBJECT MATTER**

H04L 1/06(2006.01)i

According to International Patent Classification (IPC) or to both national classification and IPC

**B. FIELDS SEARCHED**

Minimum documentation searched (classification system followed by classification symbols)

H04L; H04B; H04M

Documentation searched other than minimum documentation to the extent that such documents are included in the fields searched

Electronic data base consulted during the international search (name of data base and, where practicable, search terms used)

CNABS, CNTXT, CNKI, VEN: 信道状态信息, CSI, 预编码矩阵, PMI, 第二, 双码本, 部分, 关联, 关系, channel, state, information, precoding, matrix, index, dual, codebook, part+, relation+, correlat+

**C. DOCUMENTS CONSIDERED TO BE RELEVANT**

| Category* | Citation of document, with indication, where appropriate, of the relevant passages | Relevant to claim No. |
| --- | --- | --- |
| X | CN 101958773 A (ZTE CORPORATION) 26 January 2011 (2011-01-26) description, paragraphs [0031]-[0100], and figures 1-2 | 1, 10, 19, 28 |
| A | CN 101958773 A (ZTE CORPORATION) 26 January 2011 (2011-01-26) description, paragraphs [0031]-[0100], and figures 1-2 | 2-9, 11-18, 20-27, 29-36 |
| A | US 2011142147 A1 (TEXAS INSTRUMENTS INC.) 16 June 2011 (2011-06-16) entire document | 1-36 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 August 2018** | **21 August 2018** |

| Name and mailing address of the ISA/CN | Authorized officer |
| --- | --- |
| **State Intellectual Property Office of the P. R. China** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/089391**

| Patent document cited in search report | | | Publication date (day/month/year) | Patent family member(s) | | | Publication date (day/month/year) |
|---|---|---|---|---|---|---|---|
| CN | 101958773 | A | 26 January 2011 | CN | 101958773 | B | 24 August 2016 |
| | | | | WO | 2012041102 | A1 | 05 April 2012 |
| US | 2011142147 | A1 | 16 June 2011 | US | 2014169287 | A1 | 19 June 2014 |
| | | | | US | 8526519 | B2 | 03 September 2013 |
| | | | | US | 9001907 | B2 | 07 April 2015 |
| | | | | US | 2015215015 | A1 | 30 July 2015 |

Form PCT/ISA/210 (patent family annex) (January 2015)

**EP 3 629 504 A1**

## REFERENCES CITED IN THE DESCRIPTION

### Patent documents cited in the description

- CN 201710459501X